# EUROPEAN PATENT SPECIFICATION

(11) **EP 0 818 479 B1**
(45) Date of publication and mention of the grant of the patent: **13.09.2000**
(21) Application number: 97109889.2
(22) Date of filing: 06.07.1992
(51) Int. Cl.: C08F 246/00, C08F 220/22, C08F 230/08, C09D 157/00

(54) **Polymeric surface coatings**
Polymere Oberflächenbeschichtungszusammensetzung
Revêtements polymères de surfaces

(30) Priority: 08.08.1991 GB 9117170; 24.04.1992 GB 9208970
(43) Date of publication of application: 14.01.1998
(62) Divisional of application: 92914110.9
(73) Proprietor: BIOCOMPATIBLES LIMITED, Farnham, Surrey GU9 8QL (GB)
(72) Inventor: Bowers, Roderick W.J., Norfolk, Virginia 23507 (US); Jones, Stephen Alister Biocompatibles Ltd, Weydon Lane , Farnham, Surrey, GU9 8QL (GB); Stratford, Peter William Biocompatibles Ltd., Weydon Lane, Farnham, Surrey, GU9 8QL (GB)
(74) Representative: Jones, Helen Marjorie Meredith

(56) References cited:
- EP-A- 0 293 963
- EP-A- 0 593 561
- EP-A- 0 810 239
- EP-A- 0 861 858
- DE-A- 2 640 967
- GB-A- 1 529 378
- JP-A- 3 039 309
- US-A- 3 671 502

## Description

The present invention relates to polymers, processes for producing them and processes for coating surfaces with them. The invention also provides processes for producing certain monomers and to certain monomers used to obtain the polymers. The polymers are useful for coating surfaces of devices and materials which come into contact with protein-containing solutions and biological fluids, and rendering the surfaces bio- and haemocomaptible. Surfaces may thus be rendered suitable for prolonged contact with living tissues and body fluids and with protein-containing solutions.

The parent application is EP92914110.9 (EP0593561). EP0810239 is a co-pending divisional application from the same parent application, and, relates to polymer obtainable from zwitterionic monomer and ionic comonomer.

Materials used in the manufacture of separation substrates and devices, blood contacting devices contact and intraocular lenses, and other devices which are used in contact with protein-containing or biological fluids must be selected on the basis of acceptable physical and mechanical properties and compatability with the protein-containing or biological fluid. For any given application of these materials it is usually difficult to optimise all of these considerations simultaneously and a compromise must be reached often resulting in less than optimal performance. For example, major biological problems are often encountered with materials which have otherwise optimal mechanical and physical properties. These problems often manifest themselves as undesirable deposition of biological components and in particular proteinaceous material. This protein adsorption results in blood clot formation in blood-contacting materials, the adsorption of tear components onto contact lenses resulting in deposit formation, formation of deposits on intraocular lenses and in separation media it results in blockage and failure of separation devices. Such effects lead to significant loss in operational performance and often complete rejection and failure of devices.

In the case of medical devices, for example prostheses and components of blood dialysis equipment, it is common practice to employ biocompatible polymers to form at least the surface of the devices to discourage protein adsorption. However, these materials are not perfect and reaction with the living tissues still remains a problem; for example surface-induced thrombosis is still a major difficulty, particularly where large quantities of blood are contacted with a foreign surface such as in artificial lungs and kidneys. Formation of a clot in an artificial organ has a number of adverse or even catastrophic effects including occlusion of the blood pathway in the extracorporeal system, or embolism if the clot breaks off the artificial surface and lodges in a host blood vessel. Dialysis membranes, heart valves, circulator-assist devices, blood substitutes and artificial lungs all share this problem.

It is known that materials for use as biocompatible coatings should ideally:
(a) be capable of reproducible manufacture as pure materials;
(b) be capable of being coated onto surfaces without being degraded or adversely changed;
(c) have the requisite mechanical and permeability properties required for the specific function of the device for which they are intended;
(d) be sterilisable without adverse changes in, for example, permeability and mechanical or surface properties;
(e) not be damaged or degraded by the biological environment;
(f) not be carcinogenic.

In applications involving direct contact with blood further restrictions exist. Materials should not:
(g) induce significant platelet adhesion;
(h) interfere with the normal clotting mechanism; or
(i) cause any significant damage to the cellular elements or soluble components of the blood.

There have been many attempts to prepare biocompatible, and specifically blood compatible (i.e. haemocompatible), surfaces, which do not activate the blood coagulation process and do not promote thrombus formation. Examples of such attempts include the preparation of negatively charged surfaces, such as by use of anionic polymers or suitable oriented electret polymers, preparation of surfaces coated with the natural anticoagulant heparin or synthetic heparin analogues, preparation of surfaces with inherently low surface free energy such as by use of silicone rubber, preparation of albumin-coated surfaces, and preparation of surfaces coated with compounds which are thought to adsorb albumin preferentially from blood. All of these however have had limitations.

In JP-A-03-039309 copolymers of a zwitterionic monomer, 2-(methacryloyloxyethyl)-2'-(trimethylammonium)ethyl phosphate inner salt, and alkyl methacrylates are used to form membranes and to mould to form medical materials. There is a suggestion that the polymers could be dissolved in a solvent and used to modify surfaces of materials.

In US-A-3671502 copolymers of a zwitterionic monomer, which is a sulphobetaine or a carboxybetaine, and a hydroxyalkyl methacrylate comonomer are used as binders for hydrophilic substrates. The polymers are neutral (i.e. uncharged).

In GB-A-1529378 which corresponds to DE-A-26 40 967, cross-linkable copolymers are formed by copolymerising a zwitterionic monomer, which is a sulphobetaine or a carboxybetaine compound, and a comonomer having a reactive group such as an epoxy group. The polymers are used in thermosetting paints.

In EP-A-293963 copolymers of fluoroalkyl group containing monomers and ionic monomers are produced. The ionic groups provide cross-linking with counterionically charged groups in the polymer or at a surface. The product may be used in a wound dressing.

We have now devised film-forming polymers which can be used to coat surfaces. It has been found that these copolymers may be used to provide stable coatings on a wide variety of surfaces including, polyethylene, PVC, steel and poly(imide). The invention also provides physiadsorbable polymers which when used to coat surfaces, do not swell, to any significant extent, in aqueous environments; in some situations swelling in aqueous environments can reduce the stability of coatings of physiadsorbable polymers on surfaces.

The polymers which contain zwitterionic groups, mimic the zwitterionic structure of phospholipids such as phosphatidylcholine and sphingomyelin which are the major components of the outer membrane of all living cells. In this way the present invention seeks to provide a biocompatible surface on a coated substrate at which the deposition of proteins and cells at the substrate is minimised when the coated substrate comes into contact with a protein-containing solution or biological fluid.

In addition a variety of ligands may be attached to the polymers of the present invention when coated onto a substrate. Alternatively ligands may be attached to the polymers prior to coating on a substrate, e.g. when the polymer is in solution. The polymers of the present invention may therefore provide a means of attachment of such ligands. The term ligand includes, specific binding agents such as immunoglobulins and associated fragments thereof such as those useful for affinity separation and diagnostic applications, photosensitive and chemisensitive moieties such as those useful for detector and sensor applications and therapeutic agents useful for clinical applications. Other ligands include peptide fragments which may be chemically linked to a polymer of the invention, such as fragments which induce cell attachment and may therefore be used to allow the polymers of the present invention to provide cell seeding.

The present invention provides a polymer as claimed in claim 1. The radical polymerisable monomers are preferably ethylenically unsaturated, monomers, and the polymer has pendant groups bearing a centre of permanent positive charge and other pendant groups capable of stably binding the polymer to a surface. Such coatings bind to surfaces with good adhesion and are not removable in the environment in which the coated surfaces are used, e.g. in use as a coating on a blood-contacting surface.

The zwitterionic group bears a centre of permanent positive charge. Such zwitterionic groups mimic the structure of the head groups of phospholipids in cells. Without wishing to be limited by this theory, it is thought that the presence of such groups at a surface renders the surface more biocompatible. The extent to which a polymer renders a surface biocompatible may be assessed as a combination of factors such as reduction in the extent to which the surface causes blood platelet activation, protein adsorption, (for instance as judged by absorption of fibrinogen from human plasma) and reaction with C-reactive protein which is caused by the presence on the surface of isolated zwitterionic, e.g. phosphate ammonium ester groups. Preferably the polymers of the invention when coated onto a substrate, provide a reduction in platelet activation of at least 70%, more preferably at least 90%, as assessed by the assay described hereinafter compared to an untreated substrate. It is also preferred that the polymers of the invention, when coated onto a substrate, provide a reduction in fibrinogen absorption of at least 60% as assessed by the assay described hereinafter and a protein index of less than 1.5 x 10⁻³ compared to an untreated substrate. The protein index is defined as the ratio of the absorbance due to C-reative protein measured in the assay described hereinafter to the reduction in fibrinogen adsorption.

The nature of the groups capable of binding the polymer to a surface will be selected depending upon the nature of the surface which it is intended to coat with the polymer. Where the surface is hydrophobic, groups capable of being physisorbed at the surface may be used to bind the polymer to the surface.

Polymers of the invention therefore bind to a surface by physisorption.

The groups capable of stably binding the polymer to a surface may be present in the same monomer as the zwitterionic groups, or they may be in separate monomer species which are copolymerised to provide the polymer of the invention.

It will be understood that throughout, where a group is referred to as capable of binding a polymer to a surface this is intended to mean stably binding.

The hydrophobic pendant group of the comonomer is a fluoroalkyl group, optionally having one or more etheric oxygen atoms interrupting the carbon chain, and optionally containing one or more carbon-carbon double or triple bonds, or a siloxane group, preferably containing from 1 to 50, more preferably 5 to 30, silicon atoms. Such groups are capable of forming strong secondary valence interactions with a surface, and being physisorbed at a hydrophobic surface, i.e. adsorbed without formation of a covalent interaction.

In one embodiment the present invention therefore provides a polymer obtainable by
(i) copolymerising a radical polymerisable, preferably an ethylenically unsaturated, comonomer containing a zwitterionic group, and a radical polymerisable, preferably an ethylenically unsaturated, comonomer containing a radical polymerisable moiety and a fluoroalkyl group which optionally contains one or more etheric oxygen atoms and optionally one or more carbon-carbon double or triple bonds, or a siloxane group; or
(ii) polymerising a radical polymerisable, preferably ethylenically unsaturated, monomer containing a zwitterionic group, a fluoroalkyl group which optionally contains one or more etheric oxygen atoms, or a siloxane group.

Such a polymer may be a copolymer comprising residues of a radical polymerisable, preferably ethylenically unsaturated comonomer containing a zwitterionic group and of a radical polymerisable, preferably ethylenically unsaturated comonomer containing, in addition to the radical polymerisable moiety, a fluoroalkyl group which optionally contains one or more etheric oxygen atoms and optionally one more carbon-carbon double or triple bonds, or a siloxane group.

Alternatively such a polymer may comprise or consist of residues of a radical polymerisable, preferably ethylenically unsaturated, monomer containing a zwitterionic group and fluoroalkyl group which optionally contains one or more etheric oxygen atoms, or a siloxane group.

In this embodiment, preferably the polymer is a copolymer comprising residues of a comonomer containing a physisorbable group and a comonomer containing a zwitterionic group.

In one embodiment, where the physisorbable group is a fluoroalkyl group, optionally containing one or more etheric oxygen atoms, this group does not contain any carbon-carbon double or triple bonds.

Optionally, in any of the above embodiments, the polymers also comprise residues of one or more diluent and/or crosslinkable monomers.

The invention also provides a process for producing such a polymer which comprises polymerising such monomers and a process for coating a surface with such a polymer, for instance a process comprising the steps of (a) polymerising such monomers to form the polymer and (b) coating the surface with the polymer so formed. Optionally, the process further comprises attaching a ligand to the polymer either in solution before coating the surface, or, more preferably when coated on the surface.

In a specific embodiment the invention further provides such polymers containing residues of a crosslinkable monomer, which are uncrosslinked, when either coated on a surface or not coated on a surface and such polymers which are crosslinked when coated on a surface. The invention further provides a process of crosslinking such polymers when coated on a surface.

Monomers and comonomers which may be used in the polymers of the invention will now be described in more detail.

It is to be understood that throughout the specification (alk)acrylate, (alk)acrylic and (alk)acrylamide mean acrylate or alkacrylate, acrylic or alkacrylic and acrylamide or alkacrylamide respectively. Preferably unless otherwise stated alkacrylate, alkacrylic and alkacrylamide groups contain from 1 to 4 carbon atoms in the alkyl group thereof and are most preferably methacrylate, methacrylic or methacrylamide groups. Similarly (meth)acrylate, (meth)acrylic and (meth)acrylamide shall be understood to mean acrylate or methacrylate, acrylic or methacrylic and acrylamide or methacrylamide respectively.

### Zwitterionic Monomers

The monomer (or comonomer) bearing the zwitterionic group, includes within its structure not only a centre of permanent positive charge but also a centre of negative charge. Typically the centre of permanent positive charge is provided by a quaternary nitrogen atom.

Preferred comonomers which bear a zwitterionic group are of general formula (I)

Y-B-X (I)

wherein
B is a straight or branched alkylene, oxaalkylene or oligo-oxaalkylene chain optionally containing one or more fluorine atoms up to and including perfluorinated chains or, if X contains a carbon-carbon chain between B and the zwitterion or if Y contains a terminal carbon atom bonded to B, a valence bond;
X is a group bearing a zwitterionic group and
Y is an ethylenically unsaturated polymerisable group selected from 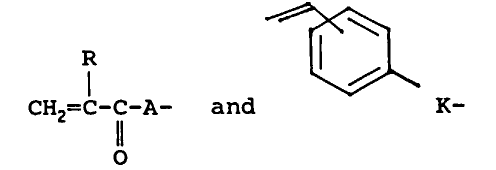 wherein:
R is hydrogen or a C₁-C₄ alkyl group;
A is -O- or -NR¹- where R¹ is hydrogen or a C₁-C₄ alkyl group or R¹ is -B-X where B and X are as defined above; and
K is a group -(CH₂)ₚOC(O)-, -(CH₂)ₚC(O)O-, - (CH₂)ₚOC(O)O-, -(CH₂)ₚNR²-,-(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃ -, or, optionally in combination with B, a valence bond and p is from 1 to 12 and R² is hydrogen or a C₁-C₄ alkyl group.

The proviso on whether B may be a valence bond ensures that the zwitterion in X is not directly bonded to a heteroatom, such as an oxygen or nitrogen atom in Y.

Preferred monomers containing a zwitterionic group are therefore of general formula (II) or (III). 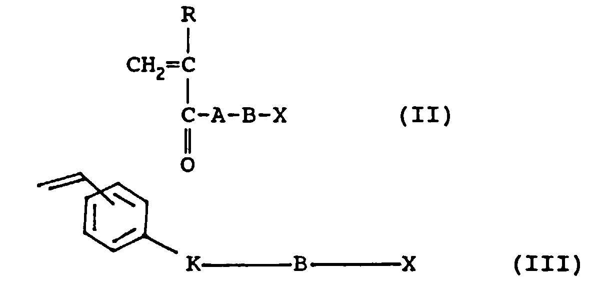 where R, A, B, K and X are as defined with reference to formula (I).

Preferably in the compounds of formula (II) R is hydrogen, methyl, or ethyl, more preferably methyl, so that (II) is an acrylic acid, methacrylic acid or ethacrylic acid derivative.

In the compounds of formula (III) K may be a valence bond and B a group, K may be a group and B a valence bond, both K and B may be groups, or K and B may together be a valence bond.
Preferably B is a group where K is a valence bond.

Where K is a group then preferably p is from 1 to 6, more preferably 1,2 or 3 and most preferably p is 1. When K is a group -(CH₂)ₚNR²-, -(CH₂)ₚNR²C(O)-, -(CH₂)ₚC(O)NR², -(CH₂)ₚNR²C(O)O-, -(CH₂)ₚOC(O)NR²- or -(CH₂)ₚNR²C(O)NR²- then R² is preferably hydrogen, methyl or ethyl, more preferably hydrogen.

In the compounds of formula (III) preferably the vinyl group is para to the group -K-B-X.

Preferably B is:
an alkylene group of formula -(CR³₂)ₐ-, wherein the groups -(CR³₂)- are the same or different, and in each group -(CR³₂)- the groups R³ are the same or different and each group R³ is hydrogen, fluorine or C₁₋₄ alkyl or fluroalkyl, preferably hydrogen, and a is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR⁴₂)_{b}O]_{c}(CR⁴₂)_{b}- where the groups -(CR⁴₂)- are the same or different and in each group -(CR⁴₂)- the groups R⁴ are the same or different and each group R⁴ is hydrogen, fluorine or C₁₋₄ alkyl or fluoroalkyl, preferably hydrogen, and b is from 1 to 6, preferably 2 or 3 and c is from 2 to 11, preferably 2 to 5; or
if X contains a carbon-carbon chain between B and the centre of permanent positive charge or if Y contains a terminal carbon atom, a valence bond.

Preferred groups B include alkylene, oxaalkylene and oligo-oxaalkylene groups of up to 12 carbon atoms optionally containing one or more fluorine atoms. Where the polymer is not intended for coating a hydrophobic surface, and therefore is not intended to be bound by physiosorption to a surface, then preferably B is an alkylene, oxaalkylene or oligo-oxaalkylene group which does not contain any fluorine atoms.

In compounds of formula (III) it is preferred that K and B contain up to 12 carbon atoms in total.

Preferred groups X are the groups of formula (IVB), (IVC), (IVD), (IVE) and (IVF) as defined below: monomers containing such groups may be used in combination with further monomers containing groups capable of binding to a surface, to provide a copolymer of the invention of these groups of formula (IVB)-(IVF) and especially (IVC) are particularly preferred.

In addition, groups of formula (VA), (VB) and (VC) are preferred as monomers containing both a zwitterionic group and an alkyl, fluoroalkyl or siloxane group capable of binding to a surface by physisorption.

The groups of formula (IVB) are: 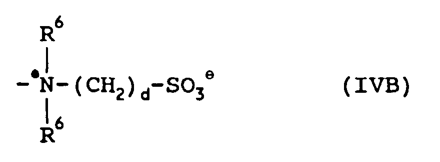 where the groups R⁶ are the same or different and each is hydrogen or C₁₋₄ alkyl and d is from 2 to 4.

Preferably the groups R⁶ are the same. It is also preferable that at least one of the groups R⁶ is methyl, and more preferable that the groups R⁶ are both methyl.

Preferably d is 2 or 3, more preferably 3.

When X is a group of formula (IVB) preferably B is a group of formula -(CR³₂)- or -(CR³₂)₂
eg. -(CH₂)- or -(CH₂CH₂)-.

The groups of formula (IVC) are: 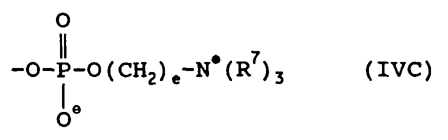 where the groups R⁷ are the same or different and each is hydrogen or C₁₋₄ alkyl, and e is from 1 to 4.

Preferably the groups R⁷ are the same. It is also preferable that at least one of the groups R⁷ is methyl, and more preferable that the groups R⁷ are all methyl.

Preferably e is 2 or 3, more preferably 2.
When X is a group of formula (IVC) preferably B is a group of formula -(CR³₂)- or -(CR³₂)₂-, eg. -(CH₂)- or -(CH₂CH₂)-.

The groups of formula (IVD) are: 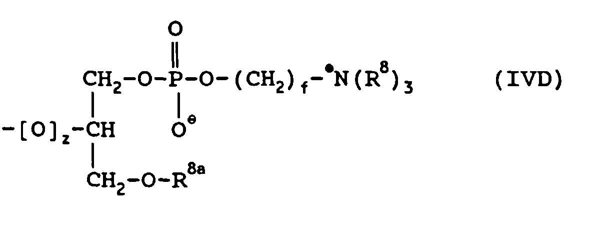 wherein the groups R⁸ are the same or different and each is hydrogen or C₁₋₄ alkyl, R^{8a} is hydrogen or, more preferably, a group -C(0)B¹R^{8b} where R^{8b} is hydrogen or methyl, preferably methyl, B¹ is a valence bond or straight or branched alkylene, oxaalkylene or oligo-oxaalkalyene group, and f is from 1 to 4; and
if B is other than a valence bond, z is 1 and if B is a valence bond, z is O, if X is directly bonded to an oxygen or nitrogen atom and otherwise z is 1.

Preferably the groups R⁸ are the same. It is also preferable that at least one of the groups R⁸ is methyl, and more preferable that the groups R⁸ are all methyl.

Preferably f is 1 or 2, more preferably 2.

Preferably B¹ is:
a valence bond;
an alkylene group of formula -(CR^{3a}₂)ₐₐ-, wherein the groups -(CR^{3a}₂)- are the same or different, and in each group (CR^{3a}₂)- the groups R^{3a}- are the same or different and each group R^{3a}- is hydrogen or C₁₋₄ alkyl, preferably hydrogen, and aa is from 1 to 12, preferably 1 to 6;
an oxaalkylene group such as alkoxyalkyl having 1 to 6 carbon atoms in each alkyl moiety, more preferably -CH₂O(CH₂)₄-; or
an oligo-oxaalkylene group of formula -[(CR^{4a}₂)_{ba}O]_{ca}- where the groups -(CR^{4a}₂)- are the same or different and in each group -(CR^{4a}₂)- the groups R^{4a} are the same or different and each group R^{4a} is hydrogen or C₁₋₄ alkyl, preferably hydrogen, and ba is from 1 to 6, preferably 2 or 3, and ca is from 1 to 12, preferably 1 to 6.

Preferred groups B¹ include a valence bond and alkylene, oxaalkylene and oligo-oxaalkylene groups of up to 12 carbon atoms.

Preferably B and B¹ are the same.

When X is a group of formula (IVD) preferably B is a group of formula -[(CR⁴₂CR⁴₂)_{c}O_{c}]CR⁴₂CR⁴₂-, eg.
-(CH₂CH₂O)_{c}(CH₂CH₂)-.

The groups of formula (IVE) are: 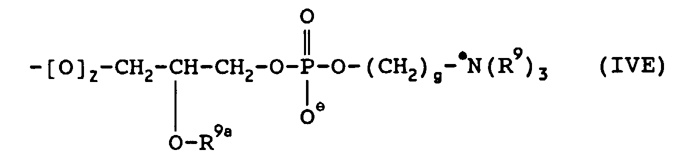 wherein the groups R⁹ are the same or different and each is hydrogen or C₁-C₄ alkyl, R^{9a} is a hydrogen or, more preferably, a group -C(O)B²R^{9b}, R^{9b} is hydrogen or methyl, preferably methyl, B² is a valence bond or a straight or branched alkylene, oxaalkylene or oligo-oxaalkylene group, and g is from 1 to 4; and
if B is other than a valence bond, z is 1 and if B is a valence bond, z is O if X is directly bonded to an oxygen or nitrogen atom and otherwise z is 1.

Preferably the groups R⁹ are the same. It is also preferable that at least one of the groups R⁹ is methyl, and more preferable that the groups R⁹ are all methyl.

Preferably g is 1 or 2, more preferably 2.

Preferably B² is:
a valence bond;
an alkylene group of formula -(CR^{3b}₂)_{ab}-, wherein the groups -(CR^{3b}₂)- are the same or different, and in each group - (CR^{3b}₂)- the groups R^{3b} are the same or different and each group R^{3b} is hydrogen or C₁₋₄ alkyl, preferably hydrogen, and ab is from 1 to 12, preferably 1 to 6;
an oxaalkylene group such as alkoxyalkyl having 1 to 6, carbon atoms in each alkyl moiety, more preferably -CH₂O(CH₂)₄-; or
an oligo-oxaalkylene group of formula -(CR^{4b}₂)_{bb}O]_{cb}- where the groups -(CR^{4b}₂)- are the same or different and in each group -(CR^{4b}₂)- the groups R^{4b} are the same or different and each group R^{4b} is hydrogen or C₁₋₄ alkyl, preferably hydrogen, and bb is from 1 to 6, preferably 2 or 3, and cb is from 1 to 12, preferably 1 to 6.

Preferred groups B² include a valence bond and alkylene, oxalkylene and oligo-oxalkylene groups of up to 12 carbon atoms.

Preferably B and B² are the same.

When X is a group of formula (IVE) preferably B is a group of formula -[(CR⁴₂CR⁴₂)_{b}O]_{c}CR⁴₂CR⁴₂-, eg.
-(CH₂CH₂O)_{c}CH₂CH₂-.

The groups of formula (IVF) are: 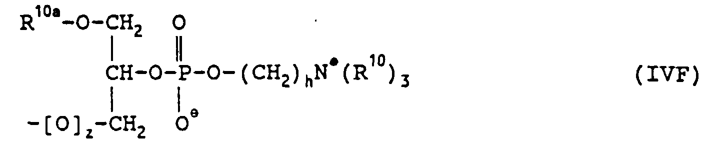 wherein the groups R¹⁰ are the same or different and each is hydrogen or C₁₋₄ alkyl, R^{10a} is hydrogen or, more preferably, a group -C(O)B³R^{10b} where R^{10b} is hydrogen or methyl, preferably methyl, B³ is a valence bond or a straight or branched - alkylene, oxaalkylene or oligo-oxaalkylene group, and h is from 1 to 4; and
if B is other than a valence bond, z is 1 and if B is a valence bond, z is O if X is directly bonded to the oxygen or nitrogen and otherwise z is 1.

Preferably the groups R¹⁰ are the same. It is also preferable that at least one of the groups R¹⁰ is methyl, and more preferable that the groups R¹⁰ are all methyl.

Preferably h is 1 or 2, more preferably 2.

Preferably B³ is:
a valence bond;
an alkylene group of formula -(CR^{3c}₂)_{ac}-, wherein the groups -(CR^{3c}₂)- are the same or different and in each group (CR^{3c}₂)- the groups R^{3c} are the same or different and each group R^{3c} is hydrogen or C₁₋₄ alkyl, preferably hydrogen, and ac is from 1 to 12, preferably 1 to 6;
an oxaalkylene group such as alkoxyalkyl having 1 to 6 carbon atoms in each alkyl moiety, more preferably -CH₂O(CH₂)₄-; or
an-oligo-oxaalkylene group of formula -[(CR^{4c}₂)_{bc}O]_{cc}- where the groups -(CR^{4c}₂)- are the same or different and in each group -(CR^{4c}₂)- the groups R^{4c} are the same or different and each group R^{4c} is hydrogen or C₁₋₄ alkyl, preferably hydrogen, and bc is from 1 to 6, preferably 2 or 3, and cc is from 1 to 12, preferably 1 to 6.

Preferred groups B³ include a valence bond and alkylene, oxaalkylene and oligo-oxaalkylene groups of up to 12 carbon atoms.

Preferably B and B³ are the same.

When X is a group of formula (IVF) preferably B is a group of formula -[(CR⁴₂CR⁴₂)_{b}O]_{c}CR⁴₂CR⁴₂-, eg.
-(CH₂CH₂O)_{c}CH₂CH₂-.

Further groups bearing a zwitterionic group are of formula (VA), (VB) and (VC). These groups also contain an alkyl or fluoroalkyl group capable of binding to a surface by physisorption. Monomers containing such a group are therefore particularly suitable for use in the polymers of the invention, optionally without separate comomoners containing a group capable of binding to a hydrophobic surface by physisorption.

The groups of formula (VA) are: 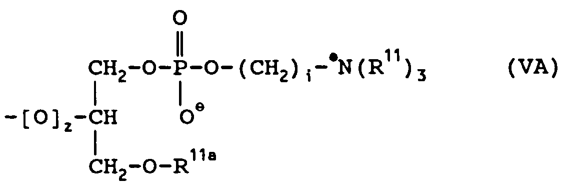 wherein the groups R¹¹ are the same or different and each is hydrogen or C₁₋₄, alkyl, R^{11a} is either
(a) a group -[C(O)]_{vw} (CR^{11b}₂)_{ww} (SiR^{11c}₂) (OSiR^{11c}₂)ᵥᵥ R^{11c} in which each group R^{11b} is the same or different and is hydrogen or alkyl of 1 to 4 carbon atoms, each group R^{11c} is the same or different and is alkyl of 1 to 4 carbon atoms or aralkyl, for example benzyl or phenethyl, vw is 0 or 1, ww is from 0 to 6 with the proviso that vw and ww are not both 0, and vv is from 0 to 49;
(b) a group of formula -C(O)B⁴-R^{11d}, in which R^{11d} is hydrogen or methyl, B is a valence bond or straight or branched alkylene, oxaalkylene or oligo-oxaalkalyene group optionally containing one or more fluorine atoms, and containing from 6 to 24, preferably 6 to 18 carbon atoms;
i is from 1 to 4; and
if B is other than a valence bond, z is 1 and if B is a valence bond, z is 0 if X is directly bonded to an oxygen or nitrogen atom and otherwise Z is 1.

Preferably the groups R¹¹ are the same. It is also preferable that at least one of the groups R¹¹ is methyl, and more preferable that the groups R¹¹ are all methyl.

Preferably i is 1 or 2, more preferably 2.

Where R^{11a} is a siloxane group as defined in (a) above, each group (CR^{11b}₂) may be the same or different, preferably the same, and preferably each group R^{11b} is hydrogen. Preferably ww is from 2 to 4, and is most preferably 3 when vw is 0 or 2 when vw is 1. Each group (SiR^{11c}₂) may be the same or different, preferably the same, and preferably each group R^{11c} is methyl. Preferably vv is from 4 to 29.

Preferably the group R^{11a} is a group -C(O)B⁴R^{11d} as defined above. In such a case, preferably B⁴ is:
a valence bond;
an alkylene group of formula - (CR^{3d}₂)_{ad}- wherein the groups -(CR^{3d}₂)- are the same or different, and in each group -(CR^{3d}₂)- the groups R^{3d} are the same or different and each group R^{2d} is hydrogen, fluorine or C₁₋₄ alkyl or fluoroalkyl, preferably hydrogen or fluorine, and ad is from 1 to 24, preferably to 18;
an oxaalkylene group such as alkoxyalkyl having 1 to 6 carbon atoms and optionally one or more fluorine atoms in each alkyl moiety, or
an oligo-oxalkylene group of formula -[(CR^{4d}₂)_{bd}O]_{cd}- where the groups -(CR^{4d}₂)- are the same or different and in each group -(CR^{4d}₂)- the groups R^{4d} are the same or different and each group R^{4d} is hydrogen, fluorine or C₁₋₄, alkyl or fluoroalkyl, preferably hydrogen or fluorine, and bd is from 2 to 6, preferably 3 or 4, and cd is from 1 to 12, preferably 1 to 6.

When B⁴ is a group -[(CR^{4d}₂)_{bd}O]_{cd}- wherein all the groups R^{4d} are hydrogen and in all the groups -[(CR^{4d}₂)_{bd}O]- bd is 2, the residues of the monomer of formula (VA) are not able to form strong secondary valence interactions with hydrophobic surfaces. Whilst residues of such monomers may be included in the polymers of the invention, it is usually also necessary to include residues of monomers which are capable of forming strong secondary valence interactions if such interactions are to bind a polymer to a surface.

Monomers which have groups containing oligo(higher alkylene) oxide moieties can be used to provide strong secondary valence interactions, so can monomers which contain oligo alkylene oxide moieties in which at least 50, preferably 70, more preferably 90 mol% of individual alkylene oxide units contain 3 or more carbon atoms. Thus, for instance a mixed oligo(ethylene oxide/propylene oxide) side chain could be used provided that there are more propylene oxide units than ethylene oxide units.

When B⁴ is a group -(CR^{4d}₂)_{bd}O]_{cd}- then preferably bd is 2 in only 50, preferably 70, more preferably 90 mole% or less of the residues

-[(CR^{4d} ₂)_{bd}O]-.

When the group -B⁴-R^{11a} is a group capable of forming strong secondary valence interactions with a surface, then monomers containing a group (VA) may be particularly suitable for use as monomers containing a group bearing a centre of permanent positive charge and an alkyl or fluoroalkyl group optionally containing one or more etheric oxygen atoms. Preferably, in such a case -B⁴-R^{11a} is an alkyl group optionally containing one or more etheric oxygen atoms and preferably 6 or more carbon atoms or a fluoroalkyl group optionally containing one or more etheric oxygen atoms and preferably 6 or more carbon atoms.

In one embodiment B and B⁴ may be the same.

The groups of formula (VB) are: 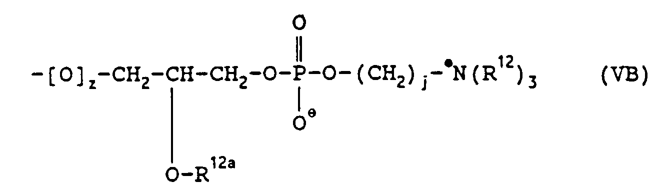 wherein the groups R¹² are the same or different and each is hydrogen or C₁-C₄ alkyl, R^{12a} is either
(a) a group -[C(O)]ₜᵤ (CR^{12b}₂)ᵤᵤ (SiR^{12c}₂) (OSiR^{12c}₂)ₜₜ R^{12c} in which each group R^{12b} is the same or different and is hydrogen or alkyl of 1 to 4 carbon atoms, each group R^{12c} is the same or different and is alkyl of 1 to 4 carbon atoms or aralkyl, for example benzyl or phenethyl, tu is 0 or 1, uu is from 0 to 6, with the proviso that tu and uu are not both 0, and tt is from 0 to 49; or
(b) a group of formula -C(O)B⁵-R^{12d}, in which R^{12d} is hydrogen or methyl, B⁵ is a valence bond or a straight or branched alkylene, oxaalkylene or oligo-oxaalkylene group optionally containing one or more fluorine atoms and from 6 to 24 carbon atoms, more preferably 6 to 18 carbons atoms,
j is from 1 to 4; and
if B is other than a valence bond, z is 1 and if B is a valence bond, z is 0 if X is directly bonded to an oxygen or nitrogen atom and otherwise z is 1. Preferably the groups R¹² are the same. It is also preferable that at least one of the groups R¹² is methyl, and more preferable that the groups R¹² are all methyl.

Preferably j is 1 or 2, more preferably 2.

Where R^{12a} is a siloxane group as defined in (a) above, each group (CR^{12b}₂) may be the same or different, preferably the same, and preferably each group R^{12b} is hydrogen. Preferably uu is from 2 to 4, and is most preferably 3 when tu is 0 or 2 when tu is 1. Each group (SiR^{12c}₂) may be the same or different, preferably the same, and preferably each group R^{12c} is methyl.

Preferably tt is from 4 to 29.

Preferably the group R^{12a} is a group -C(O)B⁴R^{12d} as defined above. In such a case, preferably B⁵ is:
a valence bond;
an alkylene group of formula -(CR^{3e}₂)ₐₑ-, wherein the groups -(CR^{3e}₂)- are the same or different, and in each group -(CR^{3e}₂)- the groups R^{3e} are the same of different and each group R^{3e} is hydrogen, fluorine or C₁₋₄ alkyl, or fluoroalkyl, preferably hydrogen or fluorine, and ae is from 1 to 24, preferably 6 to 18;
an oxaalkylene group such as alkoxyalkyl having 1 to 6 carbon atoms and optionally one or more fluorine atoms in each alkyl moiety; or
an oligo-oxaalkylene group of formula -[(CR^{4e}₂)_{be}O]_{ce} where the groups -(CR^{4e}₂)- are the same or different and in each group -(CR^{4e}₂)- the groups R^{4e} are the same or different and each group R^{4e} is hydrogen, fluorine or C₁₋₄ alkyl or fluoroalkyl, preferably hydrogen or fluorine, and be is from 2 to 6, preferably 3 or 4, and ce is from 1 to 12, preferably 1 to 6.

When B⁵ is a group -[(CR^{4e}₂)_{be}O]_{ce}- wherein all the groups R^{4e} are hydrogen and in all the groups [CR^{4e}₂)_{be}O] be is 2, the residues of the monomer of formula (VB) are not able to form strong secondary valence interactions with hydrophobic surfaces. Whilst residues of such monomers may be included in the polymers of the invention, it is also necessary to include residues of monomers which are capable of forming such strong secondary valence interactions if such interactions are to bind a polymer to a surface. Monomers which have groups containing oligo (higher alkylene) oxide moieties can be used to provide the necessary strong secondary valence interactions, so can monomers which contain oligo alkylene oxide moieties in which at least 50, preferably 70, more preferably 90 mol% of individual alkylene oxide units contain 3 or more carbon atoms. Thus, for instance a mixed oligo(ethylene oxide/propylene oxide) side chain could be used provided that there are more propylene oxide units than ethylene oxide units.

When B⁵ is a group -[(CR^{4e}₂)_{be}O]_{ce}- then preferably be is 2 in only 50, preferably 70, more preferably 90 mole% or less of the residues -[(CR^{4e}₂)_{be}O]-.

When the group -B⁵-R^{12a} is a group capable of forming strong secondary valence interactions with a surface, then monomers containing a group (VB) may be particularly suitable for use as monomers containing a group bearing a centre of permanent positive charge and an alkyl or fluoroalkyl group optionally containing one or more etheric oxygen atoms. Preferably, in such a case -B⁵-R^{12a} is an alkyl group optionally containing one or more etheric oxygen atoms and preferably 6 or more carbon atoms or a fluoroalkyl group optionally containing one or more etheric oxygen atoms and preferably 6 or more carbon atoms.

In one embodiment B and B⁵ may be the same.

The groups of formula (VC) are: 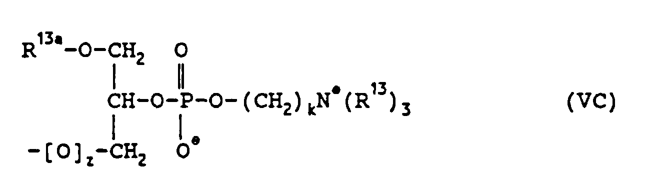 wherein the groups R¹³ are the same or different and each is hydrogen or C₁₋₄ alkyl, R^{13a} is either
(a) a group -[C(O)]ᵣₛ(CR^{13b}₂)ₛₛ(SiR^{13c}₂) (OSiR^{13c}₂)ᵣᵣ R^{13c} in which each group R^{13b} is the same or different and is hydrogen or alkyl of 1 to 4 carbon atoms, each group R^{13c} is the same or different and is alkyl of 1 to 4 carbon atoms or aralkyl, for example benzyl or phenethyl, rs is 0 or 1, ss is from 0 to 6, with the proviso that rs and ss are not both 0, and rr is from 0 to 49; or
(b) a group of formula -C(O)B⁶-R^{13d}, in which R^{13d} is hydrogen or methyl, B⁶ is a valence bond or a straight or branched alkylene, oxaalkylene or oligo-oxaalkylene group optionally containing one or more fluorine atoms and from 6 to 24, more preferably 6 to 18 carbon atoms and k is from 1 to 4; and
if B is other than a valence bond, z is 1 and if B is a valence bond, z is 0 if X is directly bonded to an oxygen or nitrogen atom and otherwise z is 1.

Preferably the groups R¹³ are the same. It is also preferable that at least one of the groups R¹³ is methyl, and more preferable that the groups R¹³ are all methyl.

Preferably k is 1 or 2, more preferably 2.

Where R^{13a} is a siloxane group as defined in (a) above, each group (CR^{13b}₂) may be the same or different, preferably the same and preferably each group R^{13b} is hydrogen. Preferably ss is from 2 to 4, and is most preferably 3 when rs is 0 or 2 when rs is 1. Each group (SiR^{13c}₂) may be the same, or different, preferably the same, and preferably each group R^{13c} is methyl.
Preferably rr is from 4 to 29.

Preferably the group R^{13a} is a group -C(O)B⁶R^{13d} as defined above. In such a case, preferably B⁶ is:
a valence bond;
an alkylene group of formula -(CR^{3f}₂)_{af}-, wherein the groups -(CR^{3f}₂)- are the same or different, and in each group (CR^{3f}₂)- the groups R^{3f} are the same or different and each group R^{3f} is hydrogen, fluorine or C₁₋₄ alkyl or fluoroalkyl, preferably hydrogen or fluorine, and at is from 1 to 24, preferably 6 to 18;
an oxaalkylene group such as alkoxyalkyl having 1 to 6 carbon atoms and optionally one or more fluorine atoms in each alkyl moiety; or
an oligo-oxaalkylene group of formula -[(CR^{4f}₂)_{bf}O]_{cf}- where the groups -(CR^{4f}₂)- are the same or different and in each group -(CR^{4f}₂)- the groups R^{4f} are the same or different and each group R^{4f} is hydrogen, fluorine or C₁₋₄ alkyl or fluoroalkyl, preferably hydrogen or fluorine, and bf is from 2 to 6, preferably 3 or 4, and cf is from 1 to 12, preferably 1 to 6.

When B⁶ is a group -[(CR^{4f}₂)_{bf}O]_{cf}- wherein all the groups R^{4f} are hydrogen and in all the groups [(CR^{4f}₂)_{bf}O] bf is 2, the residues of the monomer of formula (VC) are not able to form strong secondary valence interactions with hydrophobic surfaces. Whilst residues of such monomers may be included in the polymers of the invention, it is also necessary to include residues of monomers which are capable of forming such strong secondary valence interactions if such interactions are to bind a polymer to a surface. Monomers which have groups containing oligo(higher alkylene) oxide moieties can be used to provide the necessary strong secondary valence interactions, so can monomers which contain oligo alkylene oxide moieties in which at least 50, preferably 70, more preferably 90 mol% of individual alkylene oxide units contain 3 or more carbon atoms. Thus, for instance a mixed oligo(ethylene oxide/propylene oxide) side chain could be used provided that these are more propylene oxide units then ethylene oxide units.

When B⁶ is a group -[(CR^{4f}₂)_{bf}O]_{cf}- then preferably bf is 2 in only 50, preferably 70, more preferably 90 mol% or less of the residues -[(CR^{4f}₂)_{bf}O]-.

When the group -B⁶-R^{13a}- is a group capable of forming strong secondary valence interactions with a surface, then monomers containing a group (VC) may be particularly suitable for use as monomers containing a group bearing a centre of permanent positive charge and an alkyl or fluoroalkyl group optionally containing one or more etheric oxygen atoms. Preferably, in such a case -B⁶-R^{13a} is an alkyl group optionally containing one or more etheric oxygen atoms and preferably 6 or more carbon atoms or a fluoroalkyl group optionally containing one or more etheric oxygen atoms and preferably 6 or more carbon atoms.

In one embodiment B and B⁶ may be the same.

Particular examples of preferred monomers bearing a group containing a centre of permanent positive charge are 2(methacryloyloxy)ethyl-2'(trimethylammonium)ethyl phosphate inner salt and 1[4(4'-vinylbenzyloxy)butane]-2''(trimethylammonium)ethyl phosphate inner salt.

Monomers bearing a group containing a centre of permanent positive charge, such as those of formula (II) and (III) may be prepared by conventional techniques using known reactions, for example using a suitable substituted alkyl (alk)acrylate or suitable substituted styrene as precursor. Examples of suitable substituted alkyl (alk)acrylates include dimethylaminoethyl(meth)acrylate and 2-hydroxyethyl(meth)acrylate.

Monomers of formula (II) or (III) containing a group of formula (IVA) may be prepared by known methods. Monomers containing a group of formula (IVB) or (IVC) may be prepared as described in Reference Example 1 to 3 or by analogous known methods.

Monomers of formula (II) or (III) containing a group of formula (IVD) in which R^{8a} is -C(O)B¹R^{8b} may be prepared by selective acylation of glycerophosphorylcholine or analogues thereof at the primary hydroxyl group with an activated acid derivative such as an acid anhydride O(C(O)B¹R^{8b})₂ or an acid halide R^{8b}B¹COHal where B¹ and R^{8b} are as defined above and Hal is halogen, followed by acylation of the secondary hydroxyl group with an appropriate acylating agent, for example methacryloyl chloride. Purification, for example by column chromatography on a suitable support, may be performed after each acylation or after the second acylation only. Suitable activated acid derivatives include acid anhydrides, acid halides, reactive esters and imidazolides. The acylations may be performed in a suitable anhydrous, aprotic solvent, for example N,N--dimethylformamide, optionally in the presence of a suitable non-nucleophilic base, for example triethylamine.

Alternatively, the primary alcohol group in glycerophosphoryl choline or an analogue thereof may be blocked by reaction with a suitable protecting group reagent, for example t-butyldimethylsilyl chloride, under standard conditions and the secondary hydroxy group then treated with an acylating agent such as methacryloyl chloride. The t-butyldimethylsilyl protecting group may be removed by treatment with a dilute organic or mineral acid, for example p-toluene sulphonic acid, hydrochloric acid or with tetra-butylammonium fluoride. The deblocked primary hydroxyl group may then be treated with an activated acid derivative such as an acid anhydride O(C(O)B¹R^{8b})₂ or acid halide R^{8b}B¹COHal where B¹ and R^{8b} are as defined above, and Hal is halogen.

Analogues of glycerophosphorylcholine (compounds of formula (II) or (III) containing a group (IVD) where R^{8a} is hydrogen) may be prepared by reaction of phosphorus oxychloride with a bromoalcohol in an inert aprotic solvent, such as dichloromethane, to give a bromoalkylphosphorodichloridate. The dichloro derivative thus produced may then be treated with an appropriately protected glycerol derivative, for example 2,2-dimethyl 1,3-dioxolane-4-methanol, in the presence of a base, for example triethylamine, followed by acid hydrolysis to give a bromoalkylphosphoroglycerol derivative. This may then be treated with an amine NR⁸₃, where R⁸ is as defined above, for example trimethylamine, to generate the glycerophosphorylcholine analogue. This preparation is depicted in the following scheme. 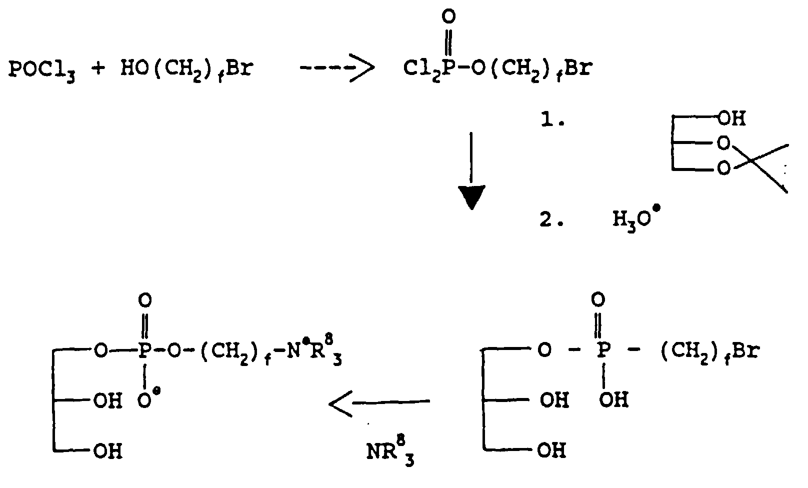 where R⁸ and f are as defined in relation to groups of formula (IVD).

Monomers of formula (II) or (III) containing a group of formula (IVE) in which R^{9a} is -C(O)B²R^{9b} may be prepared by the selective acylation of glycerophosphorylcholine or an analogue thereof at the primary hydroxyl group with for example, methacryloyl chloride followed by reaction at the secondary hydroxyl group using an activated acid derivative, such as an acid anhydride O(C(O)B²R^{9b})₂ or an acid halide R^{9b}B²COHal, where B² and R^{9b} are as defined above and Hal is halogen. The intermediates and final products may be purified, as necessary using column chromatography. Optionally, protecting group strategy, similar to that outlined above in relation to production of monomers containing a group of formula (IVD) may be employed.

Monomers of formula (II) or (III) containing a group of formula (IVF) may be prepared in an analogous manner to monomers containing groups of formula (IVD) or (IVE).

Monomers of formula (II) or (III) containing a group of formula (VA), (VB) or (VC) may be prepared by direct analogy with methods described for monomers containing groups of formula (IVD), (IVE) and (IVF) respectively.

### Comonomers capable of stably binding a polymer to a surface

In the polymer of the invention, where the zwitterionic group and group capable of stably binding the polymer to a surface are not present in the residue of the same monomer, the polymer comprises residues of comonomer containing a group capable of stably binding a polymer to a surface as well as the residues of the comonomer containing a zwitterionic group. Optionally, where the monomer containing a zwitterionic group also contains a group capable of stably binding the polymer to a surface, further groups capable of stably binding to a surface may be provided by additional comonomer residues containing a group capable of binding the polymer to a surface.

As has already been mentioned, the nature of the group capable of binding to a surface, and therefore the nature of the comonomers containing such groups, will depend upon the nature of the surface which is to be coated with the polymer. The various types of such comonomers will now be described.

It will be appreciated that in some circumstances it may be desirable to use a combination of different comonomers containing groups capable of binding to a surface. Preferably a comonomer of type a), b) and/or c) as defined below or a combination of such comonomers is used, more preferably only one of comonomer types a), b) and c) is used.
a) Comonomers containing a fluoroalkyl or a siloxane group
   The comonomers containing a fluoroalkyl or a siloxane group, which are suitable for providing binding to a hydrophobic surface, are comonomers containing a fluoroalkyl group, preferably of 6 or more carbon atoms, which group optionally contains one or more etheric oxygen atoms and optionally one or more carbon-carbon double or triple bonds, or containing a siloxane group, containing up to 50 silicon atoms, preferably in a linear chain.
   Preferably the fluoroalkyl groups contains up to 24 carbon atoms, for instance up to 18 carbon atoms, or containing a siloxane group, containing up to 50 silicons, preferably in a linear chain. Preferred comonomers containing a fluoroalkyl or a siloxane group are those of general formula (VI)

   Y¹-Q (VI)

   where Y¹ is an ethylenically unsaturated polymerisable group selected from 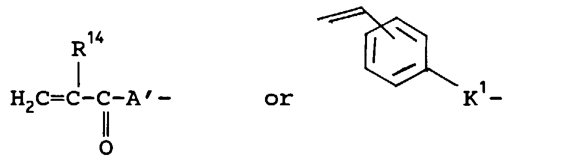 where R¹⁴ is hydrogen or C₁-C₄ alkyl,
   A' is -O- or -NR¹⁵- where R¹⁵ is hydrogen or a C₁-C₄ alkyl group or R¹⁵ is a group Q;
   K¹ is a group -(CH₂)ₗOC(O)-, -(CH)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗC(O)NR¹⁶-, -(CH₂)ₗNR¹⁶C(O)NR¹⁶- (in which the groups R¹⁶ are the same or different), -(CH₂)ₗO-, -(CH₂)ₗSO₃-, a valence bond and 1 is from 1 to 12 and R¹⁶ is hydrogen or a C₁-C₄ alkyl group; and
   Q is (a) a straight or branched alkyl, alkoxyalkyl or (oligo-alkoxy)alkyl chain containing 6 or more, preferably 6 to 24, carbon atoms substituted by one or more fluorine atoms and optionally containing one or more carbon-carbon double or triple bonds; or
(b) a siloxane group -(CR^{16a}₂)_{qq} (SiR^{16b}₂) (OSiR^{16b}₂)ₚₚR^{16b} in which each group R^{16a} is the same or different and is hydrogen or alkyl of 1 to 4 carbon atoms or aralkyl, for example benzyl or phenethyl, each group R^{16b} is alkyl of 1 to 4 carbon atoms, qq is from 1 to 6 and pp is from O to 49.

Preferred comonomers of formula (VI) bearing a group Q include those of formula (VII) and (VIII): 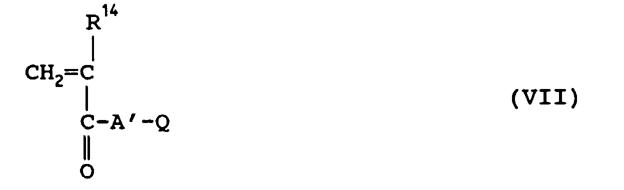 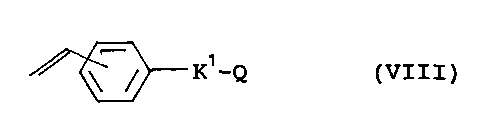 wherein:
R^{l4}, A', K^{l} and Q are as defined in relation to formula (VI).

Preferably in the compounds of formula (VII) R¹⁴ is hydrogen methyl or ethyl, more preferably methyl so that the compound of formula (VII) is preferably an acrylic acid, methacrylic acid or ethacrylic acid derivative.

In the compounds of formula (VIII) K¹ may for instance be a valence bond. Where K¹ is a group then preferably l is from 1 to 6, more preferably 1, 2 or 3 and most preferably l is 1. When K¹ is a group -(CH₂)ₗNR¹⁶-, -(CH₂)ₗOC(O)NR¹⁶-, -(CH₂)ₗNR¹⁶C(O)O-, -(CH₂)ₗNR¹⁶C(O)-, -(CH₂)ₗC(O)NR¹⁶- or -(CH₂)ₗNR¹⁶C(O)NR¹⁶- then R¹⁶ is preferably hydrogen, methyl or ethyl, more preferably hydrogen.

In the compounds of formula (VIII), preferably the vinyl group is para to the group -K¹-Q.

Preferably Q is a fluoroalkyl group optionally containing one or more etheric oxygen atoms and optionally one or more carbon-carbon double or triple bonds. More preferably Q is:
an alkyl group of formula -(CR¹⁷₂)ₘCR¹⁷₃ wherein the groups -(CR¹⁷₂)- are the same or different, and in each group -(CR¹⁷₂)the groups R¹⁷ are the same or different and each group R¹⁷ is hydrogen, fluorine or C₁₋₄ alkyl or fluoroalkyl and m is from 1 to 23, preferably 5 to 23, and provided that Q contains one or more fluorine atoms;
an alkoxyalkyl having 1 to 12 carbon atoms in each alkyl moiety; substituted by one or more fluorine atoms.

Particularly preferred groups are straight chain fluoroalkyl groups optionally containing one or more carbon-carbon double or triple bonds.

Where Q is a siloxane group, each group -(CR^{16a}₂)- may be the same or different, preferably the same, and preferably each group R^{16a} is hydrogen. Preferably qq is from 2 to 4, and is most preferably 3. Each group -(SiR^{16b}₂)- may be the same or different, preferably the same, and preferably each group R^{16b} is methyl.
Preferably pp is from 4 to 29. Preferred comonomers where Q is a siloxane group are those of formula (VII).

In one specific embodiment the group Q does not contain any ethylenic unsaturation, i.e. any carbon-carbon double or triple bonds.

Particular examples of comonomers containing a fluoroalkyl or a siloxane group include: 1H,1H,2H,2H-heptadecafluorodecyl methacrylate and monomethacryloxypropyl terminated siloxanes.

Comonomers containing a physisorbable fluoroalkyl, which does not contain a carbon-carbon double or triple bond, or a siloxane group such as those of formulae (VII) and (VIII) are commercially available or may be,prepared by conventional techniques using known reactions.

Cross-linking comonomers containing a reactive group may be used as comonomers containing crosslinkable groups, which react with other crosslinkable groups, rather than a monomer which bind covalently to a surface.

Where comonomers containing a reactive group are used to provide such crosslinkable groups then the crosslinkable groups and/or the copolymerisation conditions will be chosen so that they will not crosslink when the comonomers are copolymerised; thus the polymerisation product will be an uncrosslinked linear copolymer which may be subsequently crosslinked after coating the copolymer onto a surface so as to improve the stability of the coating. When such crosslinking between linear polymer chains is employed the crosslinkage may be formed either between two such crosslinkable groups or between a crosslinkable group and a non-inert group in a diluent comonomer residue (defined later). Such a crosslinkage may be formed either by direct reaction of the groups forming the crosslinkage or by reaction of these groups with a reactive bridging molelcule for example a reactive gas, such as ammonia.

Residues of such comonomers may therefore be present in polymers which are designed to coat hydrophobic surfaces and containing residues of a monomer containing a zwitterionic group which is of formula (VA), (VB) or (VC) or a comonomer containing a fluoroalkyl or a siloxane group, which is of formula (VII) or (VIII).

Preferred reactive comonomers which are used to crosslink the comonomer, rather than provide covalent binding to the surface, are those of formula (X) or (XI) in which Q², or Q⁴ contains a crosslinkable cinnamyl, epoxy, -CHOHCH₂Hal (in which Hal is a halogen atom), methylol, silyl, an ethylenically unsaturated crosslinkable group, such as an acetylenic, diacetylenic, vinylic or divinylic group, or an acetoacetoxy or chloroalkyl sulfone, preferably chloroethyl sulphone, group.

Particular examples of comonomers bearing a group capable of crosslinking include methacrolein, cinnamyl methacrylate, 2,3-epoxypropyl methacrylate, 3-chloro-2-hydroxypropyl methacrylate, hydroxymethyl methacrylamide, 3-(trimethoxysilyl)propyl methacrylate, 2-acetoacetoxyethyl methacrylate, and 3-(vinylbenzyl)-2-chloroethyl sulfone.

When a polymer of the invention, containing crosslinkable groups, is coated on a substrate the polymer is in substantially uncrosslinked form. After coating, crosslinking of crosslinkable groups may be performed to increase the strength and stability of the polymer coating.

### Diluent Comonomers

In addition to a) the residues of monomers containing a zwitterionic group or b) the residues of comonomers containing a zwitterionic group and comonomers which are capable of binding to a surface, the polymers of the present invention may comprise residues of a diluent comonomer.

Such diluent comonomers may be used to give the polymer the desired physical and mechanical properties. They may be of any known conventional radical polymerisable, preferably ethylenically unsaturated, type compatible with other comonomer(s).

Particular examples of diluent comonomers include alkyl(alk)acrylate preferably containing 1 to 4 carbon atoms in the alkyl group of the ester moiety, such as methyl (alk)acrylate; a dialkylamino alkyl(alk)acrylate, preferably containing 1 to 4 carbon atoms in each alkyl moiety of the amine and 1 to 4 carbon atoms in the alkylene chain, e.g. 2-(dimethylamino)ethyl (alk)acrylate; an alkyl (alk)acrylamide preferably containing 1 to 4 carbon atoms in the alkyl group of the amide moiety; a hydroxyalkyl (alk)acrylate preferably containing from 1 to 4 carbon atoms in the hydroxyalkyl moiety, e.g. a 2-hydroxyethyl (alk)acrylate; or a vinyl monomer such as an N-vinyl lactam, preferably containing from 5 to 7 atoms in the lactam ring, for instance vinyl pyrrolidone; styrene or a styrene derivative which for example is substituted on the phenyl ring by one or more alkyl groups containing from 1 to 6, preferably 1 to 4, carbon atoms, and/or by one or more halogen, such as fluorine atoms, e.g. (pentafluorophenyl)styrene.

Other suitable diluent comonomers include polyhydroxyl, for example sugar, (alk)acrylates and (alk)acrylamides in which the alkyl group contains from 1 to 4 carbon atoms, e.g. sugar acrylates, methacrylates, ethacrylates, acrylamides, methacrylamides and ethacrylamides. Suitable sugars include glucose and sorbitol. Particularly suitable diluent comonomers include methacryloyl glucose or sorbitol methacrylate.

Further diluents which may be mentioned specifically include polymerisable alkenes, preferably of 2-4 carbon atoms, eg. ethylene, dienes such as butadiene, alkylene anhydrides such as maleic anhydride and cyano-substituted alkylenes, such as acrylonitrile.

Diluent comonomers may be obtained by conventional known methods.

Of the above diluent comonomers some are inert and act simply to modify the physical and mechanical properties of copolymers containing them. Others, and in particular the hydroxyalkyl(alk)acrylates and polyhydroxyl (alk)acrylates have a reactive role in addition to simply modifying physical and mechanical properties. Such comonomers contain functional groups, such as hydroxyl groups, which may react with a crosslinking group or may react with reactive groups in other molecules to attach them to the copolymer.

It will also be appreciated that alkyl(alk)acrylates containing 6 or more carbon atoms in the alkyl group may be regarded as either diluent comonomers or comonomers capable of binding a polymer to a surface by physisorption. In particular it should be noted that a copolymer which contains such a diluent comonomer and a reactive comonomer capable of reacting at a surface to provide covalent binding to a surface may be used to coat a hydrophillic surface, the reactive comonomer providing binding to the surface and the diluent modifying physical and mechanical properties. However, such a copolymer may also be to coat hydrophobic surfaces, in which the "diluent" monomer will act as a comonomer capable of binding to the surface by physisorption and the comonomer capable of covalent binding will act as a crosslinkable comonomer.

According to a feature of the present invention polymers of the invention may be prepared by:
a) copolymerising a comonomer containing a zwitterionic group, a comonomer containing the group capable of stably binding the polymer to a surface and optionally a diluent and/or crosslinkable comonomer; or
b) polymerising a monomer containing a zwitterionic group, and the group capable of stably binding the polymer to a surface and optionally further comonomer containing the group capable of stably binding the polymer to the surface and a diluent and/or a crosslinkable comonomer.

Any conventional technique may be used for polymerisation, typically thermal or photochemical polymerisation. Where comonomers capable of producing crosslinking in the coated polymer film are present, the polymerisation condition are set such that crosslinking does not occur during polymerisation. Thus, for example, actinic radiation would not be used to prepare a polymer containing a comonomer which can form crosslinks by exposure to actinic radiation.

For thermal polymerisation a temperature from 40 to 100°C, typically 50 to 80°C is used. For photochemical polymerisation actinic radiation such as gamma, U.V., Visible or microwave radiation may be used. Typically U.V. radiation of wavelength 200 to 400 nm is used.

The polymerisation is generally performed in a reaction medium, which is for instance a solution or dispersion using as a solvent for example acetonitrile, dimethyl formamide, chloroform, dichloromethane, ethyl acetate, dimethyl sulphoxide, dioxan, benzene, toluene, tetrahydrofuran, or where the polymer does not contain groups which react with protic solvents, water or an alkanol containing from 1 to 4 carbon atoms, e.g. methanol, ethanol or propan-2-ol. Alternatively, a mixture of any of the above solvents may be used.

The polymerisation may be carried out in the presence of one or more polymerisation initiators, such as benzoyl peroxide, 2,2'-azo-bis(2-methylpropionitrile) or benzoin methyl ether. Other polymerisation initiators which may be used are disclosed in "Polymer Handbook", 3rd edition, Ed. J. Brandrup and E.H. Immergut, Pub. Wiley-Interscience, New York, 1989.

Generally the copolymerisation is performed for 1 to 72 hours, preferably 8 to 48, for instance 16 to 24 hours, and under an inert atmosphere of for example nitrogen or argon. The polymer is generally purified by dialysis, precipitation in a non-solvent (e.g. diethyl ether or acetone) or ultrafiltration. The resulting polymer is generally dried under vacuum, eg. for 5 to 72 hours and has a molecular weight from 10,000 to 10 million, preferably from 20,000 to 1 million.

The precise proportion and nature of the various comonomers used to prepare a copolymer according to the present invention comprising residues of a comonomer containing a zwitterionic group and a comonomer containing a group capable of stably binding the polymer to a surface may be adjusted to provide a copolymer which is particularly suitable for coating a particular surface. Thus the proportion of comonomer containing a group capable of stably binding the polymer to a surface may be adapted to provide efficient physisorption at a particular hydrophobic surface. Similarly the proportion of the comonomer containing a zwitterionic group and of diluent and/or crosslinkable comonomer may be adapted to provide the desired biocompatibility and physical and mechanical properties. It will be appreciated that to obtain the desired combination of properties more than one type of comonomer containing a zwitterionic group, comonomer containing a group capable of stably binding the polymer to a surface or crosslinkable and/or diluent comonomer may be used.

Similarly, in polymers comprising residues of a monomer containing a zwitterionic group and a group capable of stably binding the polymer to a surface, the nature of these groups may be adjusted to provide the desired biocompatibility and efficient binding at a particular surface, as well as desired physical and mechanical properties. Where, in addition, a diluent and/or crosslinkable comonomer is used the nature of the diluent and/or crosslinkable comonomer and the proportions of the comonomers may be likewise adjusted. It will again be appreciated that to obtain the desired combination of properties more than one type of monomer containing a zwitterionic group and a group capable of stably binding the polymer to a surface and/or more than one type of crosslinkable and/or diluent comonomer may be used.

The monomer composition which is subjected to polymerisation to provide a polymer according to the invention comprises a minimum of 0.01%, preferably 1%, more preferably 5% by weight of monomer or monomers containing a zwitterionic group and a maximum of 99.9%, preferably 99%, more preferably 95% by weight of other monomer or monomers. Such other monomer or monomers may be a monomer or monomers containing a group capable of stably binding the polymer to a surface, a diluent monomer or monomers and/or a crosslinkable monomer or monomers.

The monomer composition further comprises a minimum of 0.01%, preferably 1%, more preferably 5% by weight of monomer or monomers containing a group capable of stably binding the polymer to a surface and a maximum of 99.9%, preferably 99%, more preferably 95% by weight of other monomer or monomers. Such other monomer or monomers may be a monomer or monomers containing a zwitterionic group, a diluent monomer or monomers and/or a crosslinkable monomer or monomers.

It will be appreciated that where at least some of the monomer or monomers containing a zwitterionic group also contains a group capable of stably binding the polymer to a surface, at least a proportion of the content of both these groups is provided by the same monomer. In such a case the polymer may be a homopolymer of a monomer containing both these groups.

Where the polymer is to bind to a surface by physisorption then preferably the monomer composition comprises no more than 95%, more preferably no more than 90% and even more preferably no more than 80% by weight of monomer or monomers containing a fluoroalkyl or a siloxane group which is capable of binding the polymer to a surface by physisorption and which does not also contain a zwitterionic group, the balance of the composition being monomer or monomers containing a group bearing a centre of permanent positive charge, diluent monomer or monomers and/or crosslinkable monomer or monomers. Such a composition typically comprises up to 50% by weight of diluent comonomer or comonomers. Where diluent comonomer is present, it preferably comprises at least 1%, more preferably 5%, by weight of the total comonomer composition. Where present, crosslinkable comonomer or comonomers generally comprise from 0.1% to 20% by weight of the total comonomer composition.

Where different comonomers are used to provide the zwitterionic charge and the physisorption, then preferably the molar ratio in the copolymer of zwitterionic comonomer residues to comonomer residues containing a fluoroalkyl or siloxane group capable of binding the polymer to a surface by physisorption is from 5:95 to 80:20, more preferably 10:90 to 50:50. In addition the copolymer preferably comprises from 5% to 50%, more preferably 10% to 25%, by mole residues of diluent monomer and/or from 0.1 to 20%, more preferably 1% to 10%, by mole residues of crosslinkable comonomer, provided that where residues of both diluent and crosslinkable comonomer are present, they do not exceed in combination 50%, preferably 35% by mole.

In addition the monomer or comonomer composition may comprise further components such as a polymerisation initiator, chain transfer agent, acid, base, surfactant, emulsifier or catalyst of conventional type each in an amount from 0.1% to 5%, typically from 0.2% to 3% and preferably about 0.5%, by weight each relative to the total weight of the monomers.

As a further feature the present invention provides a process for biocompatibilising a surface which comprises coating the surface with a polymer according to the present invention. Various types of surfaces may be coated depending upon the nature of the groups in the polymer capable of binding it to the surface.

Polymers containing residues of monomers containing fluoroalkyl or siloxane groups capable of binding the polymer to a surface by physisorption are particularly suitable for coating hydrophobic surfaces, e.g. polyethylene, polypropylene and polytetrafluoroethylene (PTFE) surfaces; fluorine containing polymers of the invention being particularly suited to coating PTFE surfaces.

Hydrophillic surfaces may be rendered hydrophobic and suitable for coating with such polymers by known methods (see for example "Chemical Reactions of Polymers" Ed. E.M. Fettes, 1964, Interscience, London).

Treatment with such a polymer is generally carried out by coating the surface with a solution, dispersion (including a microdispersion) of the polymer, generally in an alcoholic, aqueous, organic or halogenated solvent or a mixture thereof, e.g. methanol, ethanol, dichloromethane or freon. The treatment is generally carried out at ambient or elevated temperature, such as from 5 to 60°C.

In one specific embodiment of the invention, the copolymer is coated onto the substrate in the form of a microdispersion for example a microemulsion.

After coating the polymer may be crosslinked if it contains the residues of crosslinkable comonomer by known method for crosslinking the specific crosslinkable groups which are present. Crosslinking may, for instance, be introduced thermally, using actinic radiation, using reactive gases for example ammonia by changing the pH, using difunctional additives or by using activation chemistries for example by known methods as described in "Methods in Enzymology, volume 135, Immobilised Enzymes and Cells, part B", Ed. K. Mosbach, Academic Press Inc, New York, 1987. This activation may be performed on the dry coating, in the cases of thermal radiation or gas treatment. Alternatively for cases where the pH needs to be changed or additives need to be included, activation may be performed on the coated material in a solution which does not remove the coating.

Materials may be coated with polymers of the invention by known techniques, such as dip-coating, spray-coating, web-coating or spin coating.

Materials having surfaces coated according to the present invention can be used as a construction material for implants or prostheses for the human or animal body, particularly where these implants or prostheses are to come into direct physical contact with blood and where biocompatibility and particularly haemocompatibility are required e.g. in heart valves. They can also be used in the construction of membranes and other devices that are to be brought into contact with blood or other body fluids on an extra-corporeal basis, for example in heart-lung machines or artificial kidneys.

Additionally the polymers of the invention can be used to coat materials employed in down stream processing applications e.g. separation membranes and process equipment and tubing. In particular the materials of the invention can be used to modify the surface properties of biofiltration membranes in bioreactors and fermentation systems, where the membranes come into direct contact with complex biological solutions containing e.g. proteins, polysaccharides, fats and even whole cells. The polymers of the invention are particularly useful in reducing membrane fouling by the components of a process solution.

When the polymers of the present invention are used to coat the surface of a material which is then used in the construction coat of finished devices, it may be necessary to take precautionary steps to ensure that the coated surface is not damaged and the effectiveness of the treatment reduced before the finished device is produced.

In addition, the polymers of the present invention can be used to coat finished implants, prostheses, membranes, catheters, contact lenses, intraocular lenses, and other devices which are coated with a polymer according to the present invention to impart biocompatibility to the article.

The invention thus also provides a finished device comprising a surface having a coating thereon of a polymer of the present invention.

The present invention will now be further illustrated by the following Examples:

### Examples

The following assays have been used to evaluate coatings of polymers according to the present invention.

### Protein adsorption using an enzyme immunoassay

The assay determines adsorption of human fibrinogen at a surface. This protein is representative of protein which is typically adsorbed at a surface. The assay can be readily modified to determine the adsorption of other proteins.

Discs (7mm in diameter) of untreated material (as controls) and material treated with polymer as described below, were prepared and washed with phosphate buffered saline (PBS) for at least 10 minutes in the wells of microplates. The samples were incubated with human plasma (300µl) for 10 minutes and then washed with PBS three times. Each of the test samples and each of the control samples were treated with human fibrinogen-specific antibody (300µl) for 30 minutes and again washed with PBS three times. As a control for non-specific binding of antibody to the samples, each sample was also incubated with non-specific antibody (300µl) for 30 minutes. A conjugate of horseradish peroxidase and a second antibody specific to the first antibody (300µl) was added to both the test samples and the controls and incubated for 30 minutes before washing. Each of the test samples and the controls were transferred to new microplates and a solution of 2,2'-azino-bis(3-ethyl benzthiazoline-6-sulphonic acid) (ABTS) in phosphate-citrate buffer (300µl,0.6mg/ml) added, the reaction was allowed to proceed for 10 minutes. At this time an aliquot of the mixture (200µl) was removed and added to a solution of citric acid and sodium azide in distilled water (20µl, 0.21g/ml and 2mg/ml respectively). The optical density of the solutions was measured using a Techgen automated plate reader at 650nm using the ABTS solution as blank.

In an alternative procedure, rather than using ABTS, each of-the samples was transferred to wells of new microplates and a solution of o-phenylene diamine (OPD) in phosphate-citrate buffer (300µl, 0.4mg/ml) added, and the reaction was allowed to proceed for 10 minutes. At this time an aliquot of the mixture (200µl) was removed from each well and the optical density of the solutions was measured using a Techgen automated plate reader at 450nm using the OPD solution as blank.

### Activated Platelet Study

Blood was collected from a healthy adult volunteer using the double syringe method where the first 5ml of blood is discarded. The blood was collected into tri-sodium citrate (32g/l) in the proportion of 9 volumes to 1 volume citrate in plastic tubes. The samples were kept at room temperature on a spiral mixer until used.

Discs (7mm in diameter) of untreated material as controls and material treated with polymers as described below were prepared and placed into the wells of a microplate. The samples were incubated with whole fresh citrated blood (200µl) on a rotary mixer for 30 minutes before washing in PBS four times. Platelet activation was measured by a proprietary assay [Lindon, J.N. et al., Blood, 68, 355 (1986)].

In an alternative procedure half of the test replicates were incubated with citrated blood (200µl) and the remainder were incubated with EDTA-treated blood on a phase shaker for 30 minutes before washing in PBS four times. Platelet activation was measured in a manner similar to that described above for detection of proteins by enzyme immunoassay using antibodies against GMP140 to detect the presence of this platelet activation marker on the surface of biomaterials. In the presence of EDTA, which extracts calcium from inside platelets, activation is inhibited, so that incubation with EDTA-treated blood acts as a non-specific control for activation, obviating the need for incubation in non-specific antibody.

### C-Reactive protein (CRP) binding assay

C-reactive protein is a protein which binds specifically to isolated ammonium phosphate esters groups e.g. phosphoryl choline groups which are attached to a surface.

Discs (7mm in diameter) of untreated material and material treated with polymer as described below, were prepared and washed with HEPES-buffered saline (HBS) for a least 10 minutes in the wells of microplates. The samples were incubated in quadruplet for 45 minutes in a protein solution consisting of bovine serum albumin (BSA) (40 mg/ml) and CRP (0.012 mg/ml) in HBS and containing calcium chloride (lmM). In parallel, identical samples (both coated and uncoated) were incubated either in BSA/Ca²⁺ solution in the absence of CRP, in BSA/CRP/Ca²⁺ solution in the presence of soluble phosphoryl choline (1.5 mg/ml) or in BSA/CRP solution containing EDTA (20mM) rather than calcium chloride.

After incubation, all the samples were washed in phosphate buffered saline (PBS) three times and then incubated for 1 hour in 300µl of a 1:100 dilution of commercially available anti-CRP antibody conjugated with horseradish peroxidase. The samples were washed three times in PBS as before and transferred to new microplates. A solution of o-phenylene diamine (OPD, 0.4 mg/ml) in phosphate-citrate buffer was added and the reaction allowed to proceed for ten minutes. At this time an aliquot of the mixture (200µl) in each of the wells was transferred to a new well, and the optical density of the solutions measured using a Techgen automated plate-reader at 450 nm using the OPD solution as a blank.

A positive control containing isolated phosphoryl choline groups may be provided using beaded agarose immobilised with p-aminophenylphosphoryl choline. The specificity of CRP binding may be demonstrated by inhibition by phosphoryl choline and dependance upon the presence of calcium.

### Example 1

### Preparation of poly(2(methacryloyloxyethyl)-2'(trimethylammonium)ethyl phosphate inner salt-co-1H. 1H, 2H, 2H,heptadecafluorodecyl methacrylate (2:1)

2(methacryloyloxyethyl)-2'(trimethylammonium)ethyl phosphate inner salt (1.0g, 0.0034 mole) and 1H, 1H, 2H, 2H-heptadecafluorodecyl methacrylate (0.90g, 0.0017 mole)-were dissolved in methanol (10ml) and tetrahydrofuran (10ml). The solution was stirred (250rpm) at 23°C under a stream of nitrogen (50ml/min) for 30 minutes. 2,2'-azo-bis(2-methylpropionitrile) (0.0167g, 0.10mmole) was added and the flow of nitrogen was reduced to 10ml/min, the reaction temperature was raised to 60°C. This temperature and nitrogen flow rate were maintained for 16 hours.

The mixture was allowed to cool and vacuum filtered. The filtrate was evaporated to dryness using a rotary evaporator and dissolved in dichloromethane (10ml) and methanol (10ml). The polymer was isolated from this mixture by precipitation in acetone (500ml), vacuum filtration and drying. The polymer was redissolved in dichloromethane (10ml) and methanol (10ml) and isolated as before. The resulting polymer, obtained in 70-80% yield was a white powder.
NMR(200MHz, d, ppm, CD₃OD/CDCl₃) 4.2-4.4 (b), 3.8-4.2 (b), 3.6-3.8 (b), 3.3 (s), 2.4-2.7(b), 2.2-1.7(b), 1.2-1.0(b), 0.8-1.0(b)
The polymer was used to coat a polyvinylidene fluoride microfiltration membrane. The resulting coated membrane showed very little flux decline during processing with bovine serum albumin (BSA) indicating very little protein fouling. The flux change for the treated membrane was from 6000 to 5000 l/m²/hr compared to the flux change for the untreated membrane which was from 5000 to 500 l/m²/hr. Both measurements were taken over a two hour period.

### Reference Example 1

### Preparation of 2(methacryloyloxyethyl)-2'(trimethylammonium ethyl phosphate inner salt

The preparation is illustrated by the reaction scheme A which follows.
a) 2-Chloro-1,3-dioxaphospholane (1)
In a flask fitted with a pressure equalising dropping funnel, reflux condenser (fitted with a CaCl₂ guard tube) and magnetic stirrer, was placed a solution of phosphorus trichloride (220ml; 346.3g; 2.52mol) in dichloromethane (500ml). Ethylene glycol (139ml; 154.7g, 2.49mol) was then added dropwise via the dropping funnel at such a rate that the evolution of HCl did not become too excessive. On the addition of the ethylene glycol, the condenser was arranged for distillation, and the dichloromethane removed at atmospheric pressure. When the distillate temperature reached 60°C the flask was arranged for vacuum distillation using a water pump, Distillation then gave 2-chloro-1,3-dioxaphospholane (158ml; 224.5g; 71.3%) as a colourless mobile liquid (which fumes in moist air) b.pt. 36-40°C/2.8 kPa (21mm Hg). [cf 45.5-47°C/2.7 kPa (20mm Hg), Lucas *et al*, J. Am. Chem. Soc., 72, 5491, (1950)].
IR (cm⁻¹, thin film) 2980, 2905, 1470, 1210, 1005, 930, 813, 770.
b) 2-Chloro-2-oxo-1,3,2-dioxaphospholane (2)
In a flask fitted with a magnetic stirrer, reflux condenser (fitted with a CaCl₂ guard tube) and sintered glass gas inlet tube, was placed a solution of 2-chloro-1,3,2-dioxaphospholane (100.8g; 0.797mol) in dry benzene (200ml). The solution was stirred and a steady stream of oxygen was bubbled through the solution. The reaction was mildly exothermic, and temperature control was achieved by allowing the solvent to reflux. The oxygen was passed through the reaction mixture for 6 hours. The solvent was removed by rotary evaporation, and the colourless mobile residue distilled to give 2-chloro-2-oxo-1,3,2-dioxaphospholane (2) (87.41g; 77%) as a colourless mobile liquid -b.pt 95-97°C/0.2mbar [c.f. 102.5-105°C/1mbar (Edmundson, Chem. Ind. (London)), 1828 (1962); 79°C/0.4mbar (Umeda *et al*., Makromol. Chem. Rapid Commun., 3, 457, (1982)].
IR(cm⁻¹, thin film) 2990, 2910, 1475, 1370, 1310, 1220, 1030, 930, 865, 830.
c) 2(2-Oxo-1,3,2-dioxaphospholan-2-yloxy)ethyl methacrylate (3)
In a flask fitted with a magnetic stirrer, low temperature thermometer, and a pressure equalising funnel fitted with a silica gel guard tube; was placed a solution of 2-hydroxyethylmethacrylate (20.00g, 0.154mol) and triethylamine (15.60g; 0.154mol) in dry diethyl ether (300ml). The solution was stirred and cooled to between -20°C and -30°C. A solution of freshly distilled 2-chloro-2-oxo-1,3,2-dioxaphospholane(2) (21.9g; 0.154 mol) in dry diethyl ether (20ml) was then added dropwise over 30 minutes, the temperature being held at -20°C during the addition. Stirring was continued at this temperature for a further 1 hour and then for a further hour as the reaction mixture was allowed to warm to room temperature. The precipitated triethylamine hydrochloride was removed by filtration, and was washed well with dry ether. The ether was removed from the combined filtrate and washings by rotary evaporation. The cloudy oil residue was then shaken for 5 minutes with dry diethyl ether (50ml) to precipitate a further crop of triethylamine hydrochloride, which was again removed by filtration. Removal of the ether on the rotary evaporator gave (3) (34.18g; 94.3%) as a colourless viscous oil. IR (cm⁻¹, thin film) 1720, 1640, 1450, 1360, 1310, 1290, 1170, 1030, 930, 850.
NMR (CDCl₃; 60MHz, δ ppm) 1.95 (s,3H), 4.25-4.70 (m,8H), 5.70 (m,1H), 6.25 (m,1H). Rf 0.9 (SiO₂, eluting with 10% methanol:90% dichloromethane; spot visualised with molybdenum blue spray reagent and with iodine vapour).
d) 2(Methacryloyloxyethyl)-2'(trimethylammonium)ethyl phosphate inner salt (4).
The phospholane (3) (67.20g; 0.285 mol) was dissolved in 100 ml of dry acetonitrile, and placed in a heavy walled tissue culture bottle. The phospholane solution was then treated with a solution of anhydrous trimethylamine (25.74g; 0.436 mol) in dry acetonitrile (100ml). The vessel was then sealed, and placed in a water bath held at 50°C for 30 hours. The vessel was opened, and the solution brought to the boil. The solution was filtered whilst hot, and then set aside for crystallisation.
The product was collected by filtration, and most of the solvent removed by suction. The wet product was then washed thoroughly with anhydrous ether, then dried under reduced pressure, to give (4) as a white amorphous, hygroscopic solid (51.16g; 61%). Evaporation of the mother liquor gave a very viscous oil (20.00g; 23%), from which further product (4) crystallised on standing at -200C. TLC (silica gel plates, eluting with methanol/dichloromethane (l:l v/v)) showed one spot Rf 0.1, which was revealed with Dragendorff's reagent, Molybdenum blue spray reagent, and iodine vapour.
IR(cm⁻¹) 1720, 1640, 1320, 1300, 1230, 1170, 970, 750.
NMR (D₂0; 60MHz; δ ppm) 2.0 (s,3H), 3.27 (s,9H) 3.60-4.50 (m, 8H), 5.80, (m,1H) and 6.25 (m,1H).

| | | | | |
|---|---|---|---|---|
| CHN Found | C 42.98%, | H 7.88%, | N 4.42%, | P 10.51%. |
| CHN Theory | C 44.75%, | H 7.46%, | N 4.75%, | P 10.51%. |

### Reference Example 2:

### Synthesis of dimethyl(2-methacryloyloxyethyl)-(1(2-sulphopronyl)) ammonium betaine inner salt

2(Dimethylamino)ethylmethacrylate was vacuum distilled and then dissolved in 0.1M dichloromethane. To this solution was added an equimolar amount of propane sultone. The betaine slowly precipitated out of solution and was recovered by filtration and washed with cold dichloromethane. The reaction is shown in Reaction Scheme B.

### Reference Example 3

### Preparation of 1[4(4'-vinylbenzyloxy)butane)-2''-(trimethylammonium) ethyl phosphate inner salt

The synthesis is depicted in Reaction Scheme C.

### 4-Hydroxy-1(4'-vinvlbenzyloxy)butane (5)

Butanediol (40ml; 40.68g; 0.452mol) was stirred in a 100ml round bottomed flask, and treated portion wise with potassium butoxide (17.60g; 0.144mol). The initial reaction was exothermic. The reaction mixture was stirred for 1.5 hours at room temperature. The resulting cloudy solution was then treated with chloromethyl styrene (20.00g; 0.131 mol). The styrene formed an upper, pale green layer, (the coloration being due to the presence of inhibitor), whose color darkened considerably on the addition of 18-crown-6 (0.49g; 1.86x10⁻³ mole). The flask was stoppered, protected from light, and stirred for 28 hours at room temperature. The mixture was then poured into water (120 ml) and extracted with dichloromethane (4x50ml). The combined organic extracts were dried (MgSO₄) and evaporated to give viscous yellow oil (932.7g). This oil was distilled from a small amount of CuCl to give a product showing some impurities on TLC. The oil was then chromatographed on silica gel, initially eluting with dichloromethane/petrol (1:1) to remove the impurities. The product was then eluted off the column with ethyl acetate/petrol (1:1). Evaporation of the solvent gave a colourless oil, which was distilled to give the desired styrylbutyl alcohol as a colourless oil b.pt. 150-152°C/0.4mbar. Yield 18.70g; 69.2%.

NMR (60MHz: CDCl₃) 1.55 (m4H C-CH₂-C); 3.50 (m, 5H, 1H exch.; O-CH₂-, O-H), 4.45 (s,2H; Ar-CH₂-), 5.50 (dd, 2H, vinylic), 6.75 (dd, vinylic), 7.40 (m, 4H, Ar-H).

IR 3402, 2938, 2888, 1631, 1602, 1582, 1511, 1480, 1445, 1382, 1320, 1116, 1063, 920, 907, 827, 801, 716 and 667 cm⁻¹

### 4(2-Oxo-1,2,3-dioxaphospholane-2-yloxyl-1(4'-vinylbenzyloxy)butane (6)

4-Hydroxy-1(4'-vinylbenzyloxy)butane (5) (10.03g; 48.69 mmol) and dried triethylamine (4.92g, 48.69 mmol) were dissolved in dry diethyl ether (150ml) and the resulting solution placed in a rigorously dried flask. The solution was cooled to -30°C and 2-chloro-2-oxo-1,3,2-dioxaphospholane (6.94g; 48.69 mmol) added dropwise over 30 minutes, the temperature being held at -30°C. The reaction mixture was then stirred for a further 2 hours, during which time the temperature was allowed to rise to 10°C. The mixture was filtered and the precipitate washed with dry ether. The filtrate was evaporated (20°C / 21mm) to give a cloudy oil. The residue was shaken with 50ml of dry ether and refiltered. Evaporation of the filtrate gave the product as a viscous yellow oil (13.73 g; 90.4%).

TLC (eluting with 10% methanol 90% dichloromethane) showed one major spot, which stained with acid molybdate reagent (Rf 0.61), IR (thin film) 3458, 2945, 2917, 2860, 1630, 602, 1581, 1475, 1419, 1363, 1283, 1103, 1032, 820, 842, 807, 800, 715, 610 and 421 cm⁻¹.

### 1[4(4'-vinylbenzyloxy)butane]-2''(trimethylammonium)ethyl phosphate inner salt (7)

Trimethylamine (2.00g, 33.9 mmol) was distilled into a reaction vessel, and frozen with liquid nitrogen. A solution of the 4(2-oxo-1,3,2-dioxaphospholane-2-yloxy)-1-(4'-vinylbenzyloxy)butane (6) (10.00g, 32.1 mmol) in anhydrous acetonitrile (40ml) was then added to the reaction vessel, which was then sealed and placed in a thermostatted water bath (50°C for 50 hours). The reaction vessel was then cooled to room temperature, opened, and the reaction mixture evaporated to about half its original volume (21 mm pressure). The concentrated solution was then stirred at room temperature, whilst anhydrous ether (200ml) was added dropwise to precipitate the product as a viscous oil. The mixture was then left for several hours at -10°C. The product was collected by decanting off the supernatant solid. TLC (eluting with methanol/dichloromethane 1:1) showed one major spot at Rf 0.0-0.1 which stained with both Dragendorffs reagent and acid molybdate.

### Reference Example 4

### Preparation of 2(acryloyloxyethyl)-2'-(trimethylammonium) ethyl phosphate inner salt

The synthesis is essentially analogous to that described in Reference Example 1 and uses a synthetic strategy analogous to that shown in Reaction Scheme A.
(a) 2-(2-Oxo-1,3,2-dioxaphospholan-2-yloxy)ethyl acrylate
   2-Hydroxyethyl acrylate (11.5ml, 0.1M) and triethylamine (14.6 ml) in dry diethyl ether (250ml) were cooled to -25°C under nitrogen as a solution of 2-chloro-2-oxo-1,3,2-dioxaphospholane (14.3g) in dry diethyl ether was added over 20 minutes. The mixture was stirred for a further 1 hour at -20°C and then allowed to warm to 10°C over a further hour. The precipitate was filtered, washed with ethyl acetate (100ml) and the combined filtrate and washings evaporated under reduced pressure to give a pale yellow oil (21g).
   ¹H NMR (200MHz) d (CD₃CN) 6.4 (1H,dd), 6.2 (1H,dd), 5.9 (1H,dd), 4.0-3.6 (8H,complex) ppm.
(b) 2-(Acryloyloxyethyl)-2'-(trimethylammonium)ethyl phosphate inner salt.
   2-(2-Oxo 1,3,2-dioxaphospholan-2-yloxy) ethyl acrylate (21g,0.095M) in acetonitrile (50ml) was treated with a solution of triethylamine (12.1g) in acetonitrile (150ml) in a pressure reactor at 50°C for 17 hours. The mixture was cooled and some of the excess triethylamine removed by evaporation under reduced pressure.
   The solid material was filtered under nitrogen, washed with acetonitrile (20ml) and diethylether (50ml) and then dried under reduced pressure to give a colourless oil (12.1g, 45%).
   ¹H NMR (200MHz) d (D₂0) 6.45 (1H,dd,J1.2 and 17.1 Hz), 6.25 (1H,dd,J1.2 and 10.25Hz), 6.02 (1H,dd, J1.23 and 10.25Hz), 4.4 (2H,m), 4.3 (2H, m), 4.2 (2H,m) 3.6(2H,m) and 3.2(9H,s) ppm.

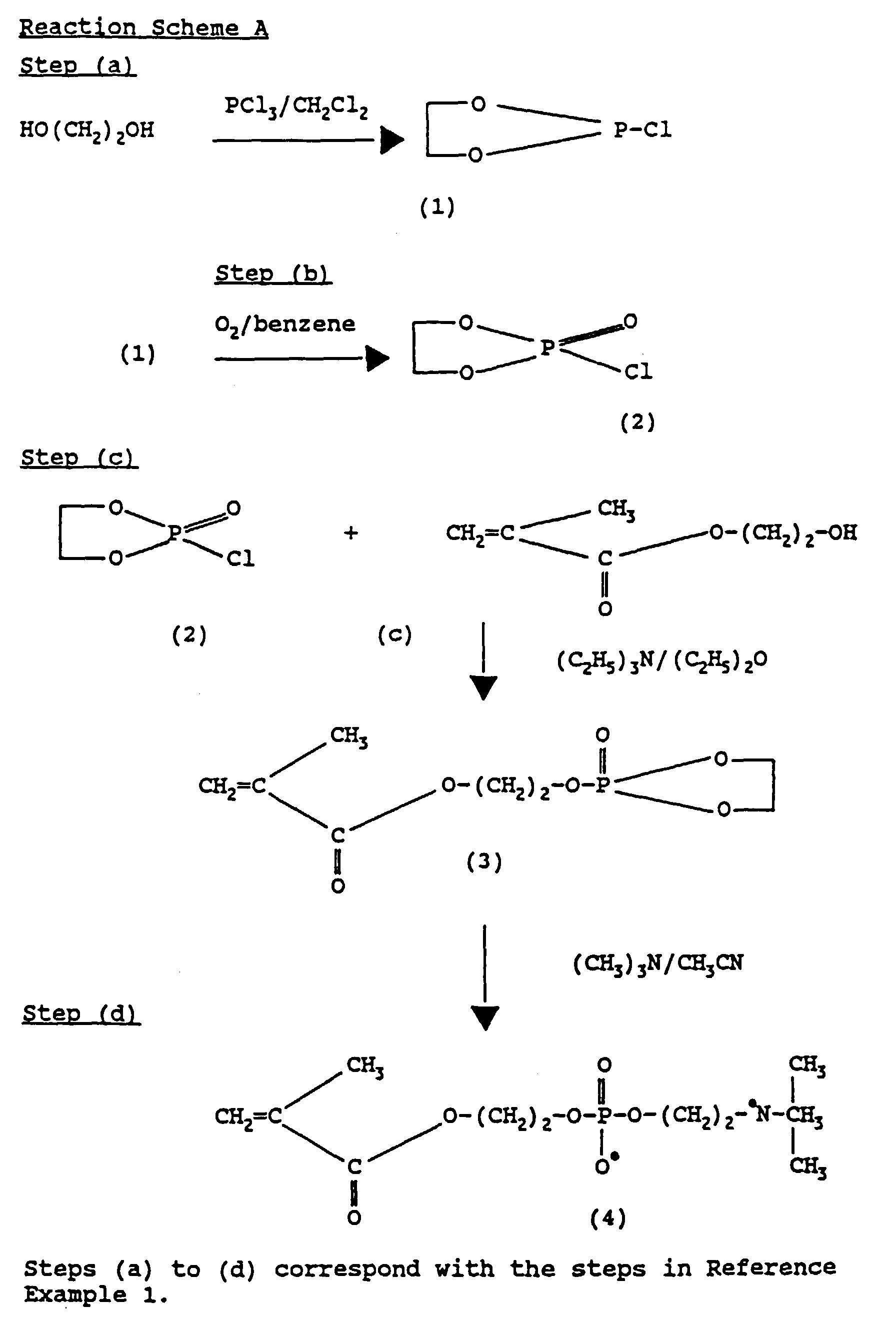

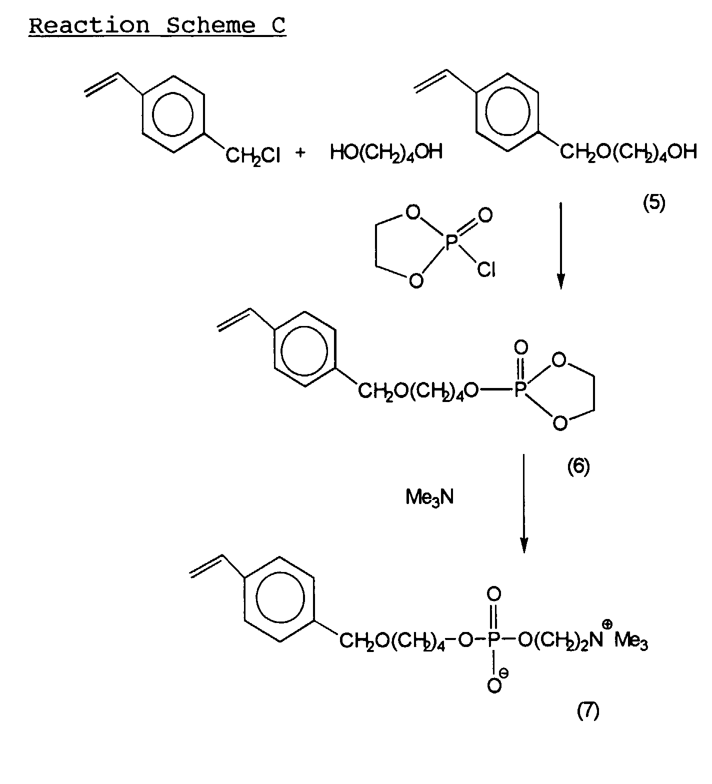

## Claims

1. A polymer obtainable from a radical polymerisable zwitterionic monomer containing a zwitterionic group and a radical polymerisable comonomer containing a pendant group selected from fluoroalkyl groups optionally containing one or more etheric oxygen atoms and optionally containing one or more carbon-carbon double or triple bonds and siloxane groups.

2. A polymer according to claim 1 obtainable from a monomer containing both the said zwitterionic group and the said pendant group.

3. A polymer according to claim 1 obtainable from one monomer containing said zwitterionic group and a comonomer containing said pendant group which is a different compound to said monomer containing a zwitterionic group.

4. A polymer according to claim 3 in which the said comonomer has the general formula (VI)
Y¹-Q (VI)
where Y¹ is an ethylenically unsaturated polymerisable group selected from 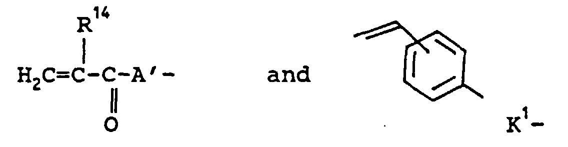 where R¹⁴ is hydrogen or C₁-C₄ alkyl,
A' is -O- or NR¹⁵- where R¹⁵ is hydrogen or a C₁-C₄ alkyl group or R¹⁵ is a group Q;
K¹ is a group -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (in which the groups R¹⁶ are the same or different), -(CH₂)ₗO-, -(CH₂)ₗSO₃-, a valence bond and l is from 1 to 12 and R¹⁶ is hydrogen or a C₁-C₄ alkyl group; and
Q is selected from
straight or branched alkyl, alkoxyalkyl and (oligoalkoxy)alkyl chains substituted by one or more fluorine atoms and optionally containing one or more carbon-carbon double or triple bonds.

5. A polymer according to claim 4 in which Q has the formula -(CR¹⁷₂)ₘCR¹⁷₃ wherein the groups (CR¹⁷₂) are the same or different, and in each group (CR¹⁷₂) the groups R¹⁷ are the same or different and each group R¹⁷ is selected from hydrogen, fluorine or C₁₋₄ alkyl or fluoroalkyl, l and m is from 1 to 23, provided that Q contains one or more fluorine atoms.

6. A polymer according to claim 5 in which the comonomer is 1H, 1H, 2H, 2H-heptadecylfluorodecylmethacrylate.

7. A polymer according to claim 3 in which the said monomer is a compound of the general formula (VI)
Y¹-Q (VI)
where Y¹ is an ethylenically unsaturated polymerisable group selected from 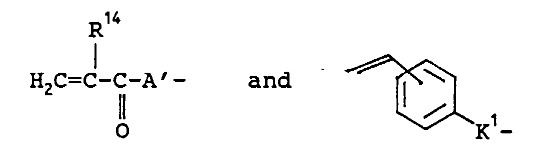 where R¹⁴ is hydrogen or C₁-C₄ alkyl,
A' is -O- or NR¹⁵- where R¹⁵ is hydrogen or a C₁-C₄ alkyl group or R¹⁵ is a group Q;
K¹ is a group -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (in which the groups R¹⁶ are the same or different), -(CH₂)ₗO-, -(CH₂)ₗSO₃-, a valence bond and l is from 1 to 12 and R¹⁶ is hydrogen or a C₁-C₄ alkyl group; and
Q is a siloxane group -(CR^{16a}₂)_{qq}(SiR^{16b}₂) (OSiR^{16b}₂)ₚₚR^{16b} in which each group R^{16a} is the same or different and is hydrogen or alkyl of 1 to 4 carbon atoms, each group R^{16b} is alkyl of 1 to 4 carbon atoms, qq is from 1 to 6 preferably 2 to 4, and pp is from 0 to 49, preferably 4 to 29.

8. A polymer according to claim 7 in which each group -(CR^{16a}₂) is the same, in which each group R^{16a} is preferably hydrogen and each group SiR^{16b}₂ the same, each group R^{16b} preferably being methyl.

9. A polymer according to claim 8 in which the comonomer is mono 3-methacryloyloxypropyl-terminated polydimethyl siloxane.

10. A polymer according to any of claims 3 to 9 in which the monomer containing said zwitterionic group has the formula:
Y-B-X (I)
wherein
B is a straight or branched alkylene, oxaalkylene or oligo-oxaalkylene chain optionally containing one or more fluorine atoms up to and including perfluorinated chains, or if X contains a carbon-carbon chain between B and the zwitterion or if Y contains a terminal carbon atom bonded to B, a valence bond;
X is a group bearing a zwitterionic group and
Y is an ethylenically unsaturated polymerisable group selected from 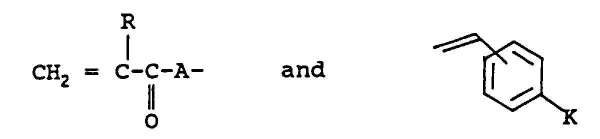 wherein:
R is hydrogen or a C₁-C₄ alkyl group;
A is -O- or -NR¹- where R¹ is hydrogen or a C₁-C₄ alkyl group or R¹ is -B-X where B and X are as defined above; and
K is a group -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²-, (in which the groups R² are the same or different) -(CH₂)ₚO-, -(CH₂)ₚSO₃-, or, optionally in combination with B, a valence bond and p is from 1 to 12 and R² is hydrogen or a C₁-C₄ alkyl group.

11. A polymer according to claim 10 in which X is selected from groups IVB, IVC, IVD, IVE and IVF in which group IVB has the formula 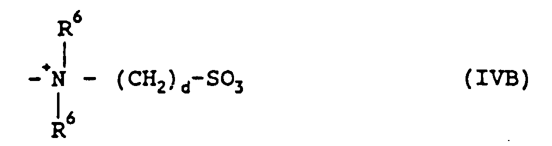 wherein the groups R⁶ are the same or different and each is hydrogen or C₁₋₄ alkyl and d is from 2 to 4;
group IVC has the formula 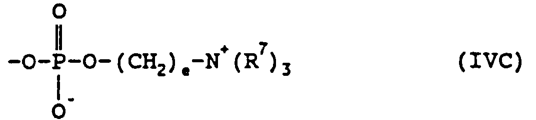 where the groups R⁷ are the same or different and each is hydrogen or C₁₋₄ alkyl, and e is from 1 to 4;
group IVD has the formula 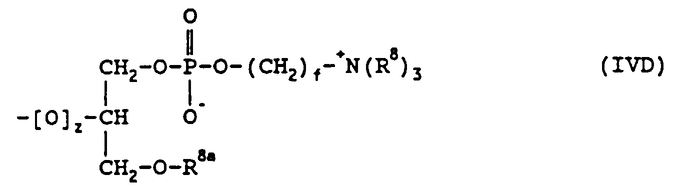 wherein the groups R⁸ are the same or different and each is hydrogen or C₁₋₄ alkyl, R^{8a} is hydrogen or a group -C(O)B¹R^{8b} wherein R^{8b} is hydrogen or methyl, B¹ is a valence bond or straight or branched alkylene, oxaalkylene or oligo-oxaalkylene group, and f is from 1 to 4; and if B is other than a valence bond z is 1 and if B is a valence bond z is 0, if X is directly bonded to an oxygen or nitrogen atom and otherwise z is 1;
group IVE has the formula 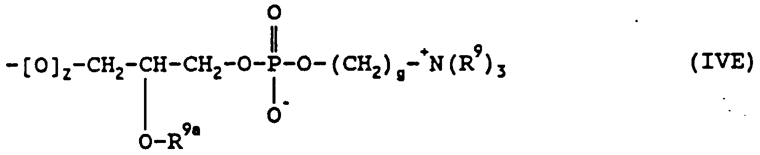 wherein the groups R⁹ are the same or different and each is hydrogen or C₁-C₄ alkyl, R^{9a} is hydrogen or a group -C(O)B²R^{9b}, wherein R^{9b} is hydrogen or methyl, B² is a valence bond or a straight or branched alkylene, oxaalkylene or oligo-oxaalkylene group, and g is from 1 to 4; and
if B is other than a valence bond z is 1 and if B is a valence bond z is 0 if X is directly bonded to an oxygen or nitrogen atom and otherwise z is 1; and
group IVF has the formula 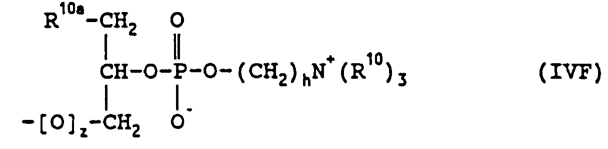 wherein the groups R¹⁰ are the same or different and each is hydrogen or C₁₋₄ alkyl, R^{10a} is hydrogen or a group -C(O)B³R^{10b} wherein R^{10b} is hydrogen or methyl, B³ is a valence bond or a straight or branched alkylene, oxaalkylene or oligo-oxaalkylene group, and h is from 1 to 4; and
if B is other than a valence bond z is 1 and if B is a valence bond z is 0 if X is directly bonded to the oxygen or nitrogen and otherwise z is 1.

12. A polymer according to claim 11 comprising residues of a comonomer of formula I wherein X is a group IVC.

13. A polymer according to any of claims 3 to 12 in which the molar ratio of zwitterionic monomer to comonomer is in the range 5:95 to 80:20.

14. A polymer according to any of the preceding claims obtainable from monomers including 5 to 50% by mole of diluent monomer not having said zwitterionic group or said pendant group.

15. A liquid coating composition containing a polymer according to any preceding claim and a solvent in which the polymer is dispersed or dissolved.

16. A coated product comprising a substrate having a surface which carries a coating, wherein the coating comprises a polymer according to any of claims 1 to 14.

17. A method in which a substrate having a surface is contacted with a liquid coating composition according to claim 15 to coat the said surface with polymer.

18. A process in which a polymer is obtainable by radical polymerisation of zwitterionic monomer containing a zwitterionic group and a monomer containing a pendant group selected from fluoroalkyl groups optionally containing or more etheric oxygen atoms and optionally containing one or more carbon-carbon double or triple bonds and siloxane groups.

19. A process according to claim 18 having the further features defined in any of claims 2 to 14.

## Patentansprüche

1. Polymer, erhältlich aus einem radikalisch polymerisierbaren zwitterionischen Monomer, das eine zwitterionische Gruppe enthält, und einem radikalisch polymerisierbaren Comonomer, das eine Seitengruppe enthält, welche aus Fluoralkylgruppen, die gegebenenfalls ein oder mehrere Ether-Sauerstoffatom(e) enthalten und gegebenenfalls eine oder mehrere Kohlenstoff-Kohlenstoff-Doppel- oder -Dreifachbindung(en) enthalten, und Siloxangruppen ausgewählt ist.

2. Polymer nach Anspruch 1, erhältlich aus einem Monomer, das sowohl die zwitterionische Gruppe als auch die Seitengruppe enthält.

3. Polymer nach Anspruch 1, erhältlich aus einem Monomer, das die zwitterionische Gruppe enthält, und einem die Seitengruppe enthaltenden Comonomer, welches eine andere Verbindung ist als das Monomer, das eine zwitterionische Gruppe enthält.

4. Polymer nach Anspruch 3, worin das Comonomer die allgemeine Formel (VI)
Y¹-Q (VI)
aufweist, worin Y¹ eine ethylenisch ungesättigte polymerisierbare Gruppe ist, ausgewählt aus 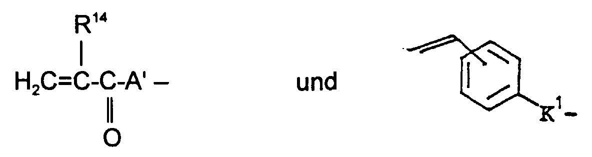 worin R¹⁴ Wasserstoff oder C₁-C₄-Alkyl ist,
A'-O- oder NR¹⁵- ist, worin R¹⁵ Wasserstoff oder eine C₁-C₄-Alkylgruppe ist oder R¹⁵ eine Gruppe Q ist;
K¹ eine Gruppe -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (worin die Gruppen R¹⁶ gleich oder verschieden sind), -(CH₂)ₗO-, -(CH₂)ₗSO₃- oder eine Valenzbindung darstellt, und I 1 bis 12 ist und R¹⁶ Wasserstoff oder eine C₁-C₄-Alkylgruppe bedeutet; und
Q aus geradkettigen oder verzweigten Alkyl-, Alkoxyalkyl- und (Oligoalkoxy)alkylketten, die mit einem oder mehreren Fluoratom(en) substituiert sind und gegebenenfalls eine oder mehrere Kohlenstoff-Kohlenstoff-Doppel- oder Dreifachbindung(en) enthalten, ausgewählt ist.

5. Polymer nach Anspruch 4, worin Q die Formel -(CR¹⁷₂)ₘCR¹⁷₃ aufweist, worin die Gruppen (CR¹⁷₂) gleich oder verschieden sind und in jeder Gruppe (CR¹⁷₂) die Gruppen R¹⁷ gleich oder verschieden sind und jede Gruppe R¹⁷ aus Wasserstoff, Fluor oder C₁₋₄-Alkyl oder Fluoralkyl ausgewählt ist, und m 1 bis 23 ist, mit der Maßgabe, daß Q ein oder mehrere Fluoratom(e) enthält.

6. Polymer nach Anspruch 5, worin das Comonomer 1H,1H,2H,2H-Heptadecylfluordecylmethacrylat ist.

7. Polymer nach Anspruch 3, worin das genannte Monomer eine Verbindung der allgemeinen Formel (VI)
Y¹-Q (VI)
ist, worin Y¹ eine ethylenisch ungesättigte polymerisierbare Gruppe ist, ausgewählt aus 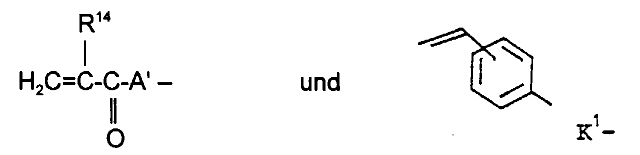 worin R¹⁴ Wasserstoff oder C₁-C₄-Alkyl ist,
A' -O- oder NR¹⁵- ist, worin R¹⁵ Wasserstoff oder eine C₁-C₄-Alkylgruppe ist oder R¹⁵ eine Gruppe Q ist;
K¹ eine Gruppe -(CH₂)ₗOC(O)-, -(CH₂)ₗC(O)O-, -(CH₂)ₗOC(O)O-, -(CH₂)ₗNR¹⁶-, -(CH₂)ₗNR¹⁶C(O)-, -(CH₂)ₗC(O)NR¹⁶-, -(CH₂)ₗNR¹⁶C(O)O-, -(CH₂)ₗOC(O)NR¹⁶-, -(CH₂)ₗNR¹⁶C(O)NR¹⁶- (worin die Gruppen R¹⁶ gleich oder verschieden sind), -(CH₂)ₗO-, -(CH₂)ₗSO₃- oder eine Valenzbindung darstellt, und I 1 bis 12 ist und R¹⁶ Wasserstoff oder eine C₁-C₄-Alkylgruppe bedeutet; und
Q eine Siloxangruppe -(CR^{16a}₂)_{qq}(SiR^{16b}₂) (OSiR^{16b}₂)ₚₚR^{16b} ist, worin jede Gruppe R^{16a} gleich oder verschieden ist und Wasserstoff oder Alkyl mit 1 bis 4 Kohlenstoffatomen bedeutet, jede Gruppe R^{16b} Alkyl mit 1 bis 4 Kohlenstoffatomen bedeutet, qq 1 bis 6 ist, vorzugsweise 2 bis 4, und pp 1 bis 49 ist, vorzugsweise 4 bis 29.

8. Polymer nach Anspruch 7, worin jede Gruppe -(CR^{16a}₂) gleich ist, wobei jede Gruppe R^{16a} vorzugsweise Wasserstoff ist, und jede Gruppe SiR^{16b}₂ gleich ist, wobei jede Gruppe R^{16b} vorzugsweise Methyl ist.

9. Polymer nach Anspruch 8, worin das Comonomer Mono-3-methacryloyloxypropyl-terminiertes Polydimethylsiloxan ist.

10. Polymer nach irgendeinem der Ansprüche 3 bis 9, worin das Monomer, welches die zwitterionische Gruppe enthält, die Formel:
Y-B-X (I)
aufweist, worin B eine geradkettige oder verzweigte Alkylen-, Oxaalkylen- oder Oligooxaalkylenkette ist, die gegebenenfalls ein oder mehrere Fluoratom(e) bis zu und einschließlich von perfluorierten Ketten enthält, oder, falls X eine Kohlenstoff-Kohlenstoff-Kette zwischen B und dem Zwitterion enthält oder falls Y ein endständiges Kohlenstoffatom an B gebunden enthält, eine Valenzbindung ist;
X eine Gruppe ist, die eine zwitterionische Gruppe trägt, und
Y eine ethylenisch ungesättigte polymerisierbare Gruppe ist, ausgewählt aus 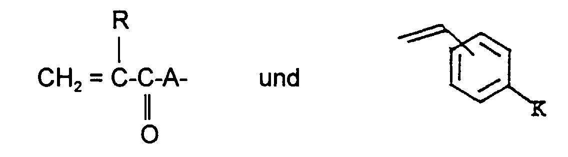 worin:
R Wasserstoff oder eine C₁-C₄-Alkylgruppe ist;
A -O- oder -NR¹- ist, worin R¹ Wasserstoff oder eine C₁-C₄-Alkylgruppe ist oder R¹ -B-X ist, worin B und X wie oben definiert sind; und
K eine Gruppe -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²- (worin die Gruppen R² gleich oder verschieden sind), -(CH₂)ₚO-, -(CH₂)ₚSO₃- oder, gegebenenfalls in Kombination mit B, eine Valenzbindung darstellt, und p 1 bis 12 ist und R² Wasserstoff oder eine C₁-C₄-Alkylgruppe bedeutet.

11. Polymer nach Anspruch 10, worin X aus den Gruppen IVB, IVC, IVD, IVE und IVF ausgewählt ist, wobei die Gruppe IVB die Formel 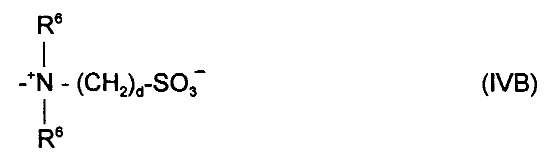 aufweist, worin die Gruppen R⁶ gleich oder verschieden sind und jeweils Wasserstoff oder C₁₋₄-Alkyl bedeuten und d 2 bis 4 ist;
die Gruppe IVC die Formel 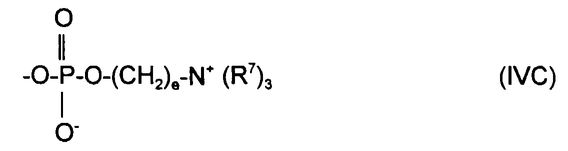 aufweist, worin die Gruppen R⁷ gleich oder verschieden sind und jeweils Wasserstoff oder C₁₋₄-Alkyl bedeuten und e 1 bis 4 ist;
die Gruppe IVD die Formel 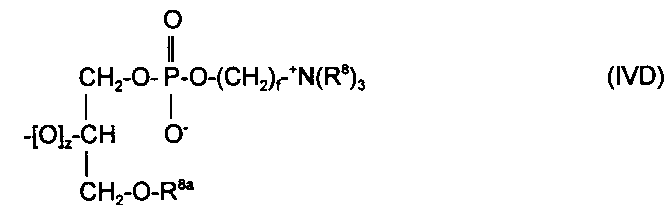 aufweist, worin die Gruppen R⁸ gleich oder verschieden sind und jeweils Wasserstoff oder C₁₋₄-Alkyl bedeuten, R^{8a} Wasserstoff oder eine Gruppe -C(O)B¹R^{8b} bedeutet, worin R^{8b} Wasserstoff oder Methyl ist, B¹ eine Valenzbindung oder eine geradkettige oder verzweigte Alkylen-, Oxaalkylen- oder Oligooxaalkylengruppe darstellt und f 1 bis 4 ist; und falls B keine Valenzbindung ist, z 1 ist, und falls B eine Valenzbindung ist, z 0 ist, wenn X direkt an ein Sauerstoff- oder Stickstoffatom gebunden ist, und andernfalls z 1 ist;
die Gruppe IVE die Formel 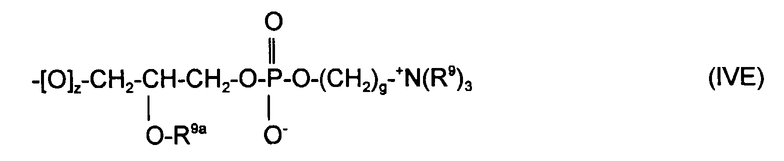 aufweist, worin die Gruppen R⁹ gleich oder verschieden sind und jeweils Wasserstoff oder C₁-C₄-Alkyl bedeuten, R^{9a} Wasserstoff oder eine Gruppe -C(O)B²R^{9b} bedeutet, worin R^{9b} Wasserstoff oder Methyl ist, B² eine Valenzbindung oder eine geradkettige oder verzweigte Alkylen-, Oxaalkylen- oder Oligooxaalkylengruppe darstellt und g 1 bis 4 ist; und
falls b keine Valenzbindung ist, z 1 ist, und falls B eine Valenzbindung ist, z 0 ist, wenn X direkt an ein Sauerstoff- oder Stickstoffatom gebunden ist, und andernfalls z 1 ist; und
die Gruppe IVF die Formel 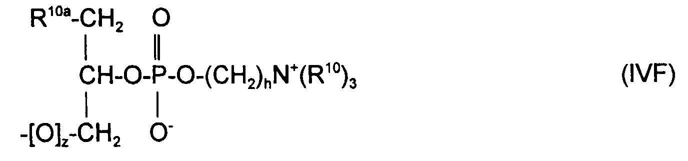 aufweist, worin die Gruppen R¹⁰ gleich oder verschieden sind und jeweils Wasserstoff oder C₁₋₄-Alkyl bedeuten, R^{10a} Wasserstoff oder eine Gruppe -C(O)B³R^{10b} bedeutet, worin R^{10b} Wasserstoff oder Methyl ist, B³ eine Valenzbindung oder eine geradkettige oder verzweigte Alkylen-, Oxaalkylen- oder Oligooxaalkylengruppe darstellt und h 1 bis 4 ist; und
falls B keine Valenzbindung ist, z 1 ist, und falls B eine Valenzbindung ist, z 0 ist, wenn X direkt an das Sauerstoff- oder Stickstoffatom gebunden ist, und andernfalls z 1 ist.

12. Polymer nach Anspruch 11, umfassend Reste eines Comonomers der Formel I, worin X eine Gruppe IVC ist.

13. Polymer nach irgendeinem der Ansprüche 3 bis 12, worin das Molverhältnis des zwitterionischen Monomers zu dem Comonomer im Bereich von 5:95 bis 80:20 liegt.

14. Polymer nach irgendeinem der vorhergehenden Ansprüche, erhältlich aus Monomeren, die 5 bis 50 Mol-% Verdünnungs-Monomer einschließen, welches die zwitterionische Gruppe oder die Seitengruppe nicht aufweist.

15. Flüssige Beschichtungszusammensetzung, enthaltend ein Polymer nach irgendeinem der vorhergehenden Ansprüche und ein Lösungsmittel, in dem das Polymer dispergiert oder gelöst ist.

16. Beschichtetes Produkt, umfassend ein Substrat mit einer Oberfläche, welche eine Beschichtung trägt, wobei die Beschichtung ein Polymer nach irgendeinem der Ansprüche 1 bis 14 umfaßt.

17. Verfahren, bei dem ein Substrat mit einer Oberfläche in Kontakt mit einer flüssigen Beschichtungszusammensetzung nach Anspruch 15 gebracht wird, um die Oberfläche mit Polymer zu beschichten.

18. Verfahren, bei dem ein Polymer erhältlich ist durch radikalische Polymerisation eines zwitterionischen Monomers, das eine zwitterionische Gruppe enthält, und eines Monomers, das eine Seitengruppe enthält, welche aus Fluoralkylgruppen, die gegebenenfalls ein oder mehrere Ether-Sauerstoffatom(e) enthalten und gegebenenfalls eine oder mehrere Kohlenstoff-Kohlenstoff-Doppel- oder Dreifachbindungen enthalten, und Siloxangruppen ausgewählt ist.

19. Verfahren nach Anspruch 18 mit den weiteren Merkmalen, die in irgendeinem der Ansprüche 2 bis 14 definiert sind.

## Revendications

1. Polymère, que l'on peut obtenir à partir d'un monomère zwittérionique polymérisable par voie radicalaire contenant un groupe zwittérionique et d'un comonomère polymérisable par voie radicalaire contenant un groupe pendant, choisi parmi les groupes fluoroalkyle contenant éventuellement un ou plusieurs atomes d'oxygène de groupes éther et contenant éventuellement une ou plusieurs liaisons carbone-carbone double(s) triple(s) et des groupes siloxane.

2. Polymère selon la revendication 1, que l'on peut obtenir à partir d'un monomère contenant à la fois ledit groupe zwittérionique et ledit groupe pendant.

3. Polymère selon la revendication 1, que l'on peut obtenir à partir d'un monomère contenant ledit groupe zwittérionique et d'un comonomère contenant ledit groupe pendant, qui est un composé différent dudit monomère contenant un groupe zwittérionique.

4. Polymère selon la revendication 3, dans lequel ledit comonomère possède la formule générale (VI)
Y¹-Q (VI)
dans laquelle Y¹ est un groupe polymérisable éthyléniquement insaturé choisi parmi 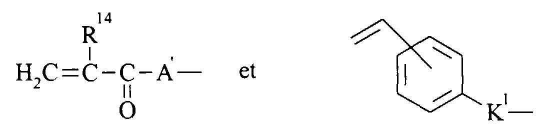 dans lesquels R¹⁴ est hydrogène ou alkyle en C₁-C₄,
A' est -O- ou -NR¹⁵- dans lequel R¹⁵ est hydrogène ou un groupe alkyle en C₁-C₄ ou R¹⁵ est un groupe Q;
K¹ est un groupe -(CH₂)_{ℓ}OC(O)-, -(CH₂)_{ℓ}C(O)O-, -(CH₂)_{ℓ}OC(O)O-, -(CH₂)_{ℓ}NR¹⁶-, -(CH₂)_{ℓ}NR¹⁶C(O)-, -(CH₂)_{ℓ}C(O)NR¹⁶-, -(CH₂)_{ℓ}NR¹⁶C(O)O-, -(CH₂)_{ℓ}OC(O)NR¹⁶-, -(CH₂)_{ℓ}NR¹⁶C(O)NR¹⁶- (dans lesquels les groupes R¹⁶ sont identiques ou différents), -(CH₂)_{ℓ}O-, -(CH₂)_{ℓ} SO₃-, une liaison de valence et ℓ est compris entre 1 et 12 et R¹⁶ est hydrogène ou un groupe alkyle en C₁-C₄; et
Q est choisi parmi
les chaînes alkyle, alcoxyalkyle et (oligoalcoxy)alkyle linéaires et ramifiées substituées par un ou plusieurs atome(s) de fluor et contenant éventuellement une ou plusieurs liaisons carbone-carbone double(s) ou triple(s).

5. Polymère selon la revendication 4, dans lequel Q répond à la formule -(CR¹⁷₂)ₘCR¹⁷₃, dans laquelle les groupes (CR¹⁷ ₂) sont identiques ou différents et dans chaque groupe (CR¹⁷ ₂), les groupes R¹⁷ sont identiques ou différents et chaque groupe R¹⁷ est choisi parmi hydrogène, fluor ou alkyle ou fluoroalkyle en C₁₋₄ et m est compris entre 1 et 23 à condition que Q contienne un ou plusieurs atomes de fluor.

6. Polymère selon la revendication 5, dans lequel le comonomère est le méthacrylate de 1H,1H,2H,2H-heptadécylfluorodécyle.

7. Polymère selon la revendication 3, dans lequel ledit monomère est un composé de formule générale (VI)
Y¹-Q (VI)
dans laquelle Y¹ est un groupe polymérisable éthyléniquement insaturé choisi parmi 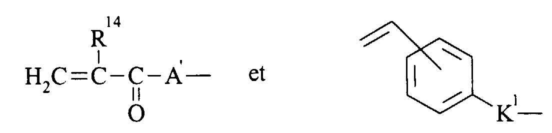 dans lesquels R¹⁴ est hydrogène ou alkyle en C₁-C₄,
A' est -O- ou -NR¹⁵- dans lequel R¹⁵ est hydrogène ou un groupe alkyle en C₁-C₄ ou R¹⁵ est un groupe Q;
K¹ est un groupe -(CH₂)_{ℓ}OC(O)-, -(CH₂)_{ℓ}C(O)O-, -(CH₂)_{ℓ}OC(O)O-, -(CH₂)_{ℓ}NR¹⁶-, -(CH₂)_{ℓ}NR¹⁶C(O)-, -(CH₂)_{ℓ}C(O)NR¹⁶-, -(CH₂)_{ℓ}NR¹⁶C(O)O-, -(CH₂)_{ℓ}OC(O)NR¹⁶-, -(CH₂)_{ℓ}NR¹⁶C(O)NR¹⁶- (dans lesquels les groupes R¹⁶ sont identiques ou différents), -(CH₂)_{ℓ}O-, -(CH₂)_{ℓ}SO₃-, une liaison de valence et test compris entre 1 et 12 et R¹⁶ est hydrogène ou un groupe alkyle en C₁-C₄; et
Q est un groupe siloxane -(CR^{16a}₂)_{qq}(SiR^{16b}₂)(OSiR^{16b}₂)ₚₚR^{16b} dans lequel les groupes R^{16a} sont identiques ou différents et chacun est hydrogène ou alkyle ayant de 1 à 4 atomes de carbone, chaque groupe R^{16b} est alkyle ayant de 1 à 4 atomes de carbone, qq est compris entre 1 et 6, de préférence entre 2 et 4, et pp est compris entre 0 et 49, de préférence entre 4 et 29.

8. Polymère selon la revendication 7, dans lequel tous les groupes -(CR^{16a}₂) sont identiques, dans lesquels chaque groupe R^{16a} est de préférence hydrogène et tous les groupes SiR^{16b}₂ sont identiques et chaque groupe R^{16b} est de préférence méthyle.

9. Polymère selon la revendication 8, dans lequel le comonomère est un polydiméthylsiloxane avec une seule terminaison 3-méthacryloyloxypropyle.

10. Polymère selon l'une quelconque des revendications 3 à 9, dans lequel le monomère contenant ledit groupe zwittérionique répond à la formule:
Y-B-X (I)
dans laquelle B est une chaîne alkylène, oxaalkylène ou oligooxaalkylène droite ou ramifiée, contenant éventuellement un ou plusieurs atomes de fluor allant y compris jusqu'aux chaînes perfluorées, ou une liaison de valence, si X contient une chaîne carbone-carbone entre B et le zwittérion ou si Y contient un atome de carbone terminal lié à B;
X est un groupe portant un groupe zwittérionique et
Y est un groupe polymérisable éthyléniquement insaturé choisi parmi 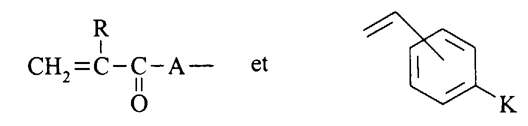 dans lesquels :
R est hydrogène ou un groupe alkyle en C₁-C₄;
A est -O- ou -NR¹- dans lequel R¹ est hydrogène ou un groupe alkyle en C₁-C₄ ou R¹ est -B-X, dans lequel B et X sont tels que définis ci-dessus; et
K est un groupe -(CH₂)ₚOC(O)-, -(CH₂)ₚC(O)O-, -(CH₂)ₚOC(O)O-, -(CH₂)ₚNR²-, -(CH₂)ₚNR²C(O)-, -(CH₂)ₚC(O)NR²-, -(CH₂)ₚNR²C(O)O-, -(CH₂)ₚOC(O)NR²-, -(CH₂)ₚNR²C(O)NR²- (dans lesquels les groupes R² sont identiques ou différents), -(CH₂)ₚO-, -(CH₂)ₚSO₃-, ou, éventuellement en combinaison avec B, une liaison de valence et p est compris entre 1 et 12 et R² est hydrogène ou un groupe alkyle en C₁-C₄.

11. Polymère selon la revendication 10, dans lequel X est choisi parmi les groupes IVB, IVC, IVD, IVE et IVF, dans lequel le groupe IVB possède la formule 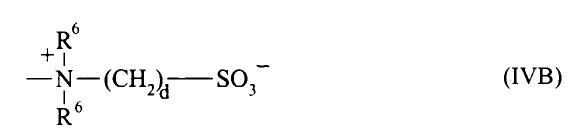 dans laquelle les groupes R⁶ sont identiques ou différents et chacun est hydrogène ou alkyle en C₁₋₄ et d est compris entre 2 et 4;
le groupe IVC possède la formule 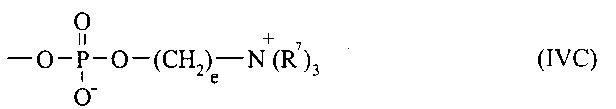 dans laquelle les groupes R⁷ sont identiques ou différents et chacun est hydrogène ou alkyle en C₁₋₄ et e est compris entre 1 et 4;
le groupe IVD possède la formule 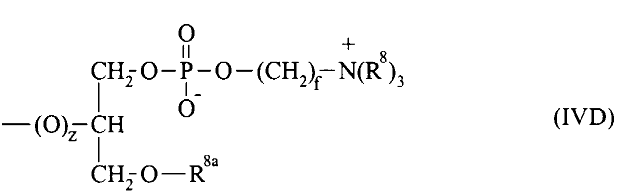 dans laquelle les groupes R⁸ sont identiques ou différents et chacun est hydrogène ou alkyle en C₁₋₄, R^{8a} est hydrogène ou un groupe -C(O)B¹R^{8b} dans lequel R^{8b} est hydrogène ou méthyle, B¹ est une liaison de valence ou un groupe alkylène, oxaalkylène ou oligooxaalkylène droit ou ramifié et f est compris entre 1 et 4; et si B est différent d'une liaison de valence, z est égal à 1 et si B est une liaison de valence, z est égal à 0, si X est directement lié à un atome d'oxygène ou d'azote et dans les autres cas z est égal à 1;
le groupe IVE possède la formule 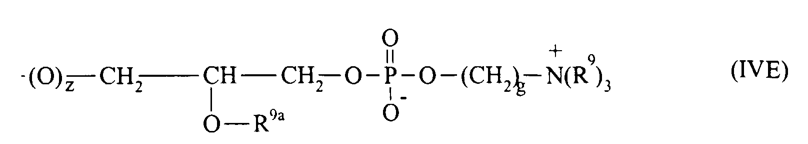 dans laquelle les groupes R⁹ sont identiques ou différents et chacun est hydrogène ou alkyle en C₁-C₄, R^{9a} est hydrogène ou un groupe -C(O)B²R^{9b}, dans lequel R^{9b} est hydrogène ou méthyle, B² est une liaison de valence ou un groupe alkylène, oxaalkylène ou oligooxaalkylène droit ou ramifié et g est compris entre 1 et 4; et
si B est différent d'une liaison de valence, z est égal à 1 et si B est une liaison de valence, z est égal à 0, si X est directement lié à un atome d'oxygène ou d'azote et dans les autres cas z est égal à 1; et
le groupe IVF possède la formule 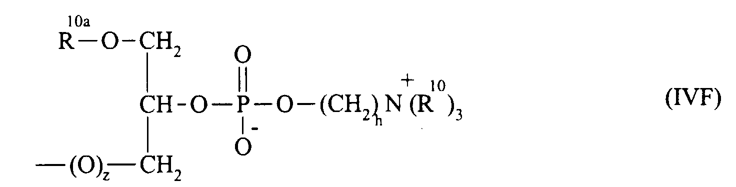 dans laquelle les groupes R¹⁰ sont identiques ou différents et chacun est hydrogène ou alkyle en C₁₋₄, R^{10a} est hydrogène ou un groupe -C(O)B³R^{10b} dans lequel R^{10b} est hydrogène ou méthyle, B³ est une liaison de valence ou un groupe alkylène, oxaalkylène ou oligooxaalkylène droit ou ramifié et h est compris entre 1 et 4; et
si B est différent d'une liaison de valence, z est égal à 1 et si B est une liaison de valence, z est égal à 0, si X est directement lié à un atome d'oxygène ou d'azote et dans les autres cas z est égal à 1.

12. Polymère selon la revendication 11, comprenant les résidus d'un comonomère de formule I dans laquelle X est un groupe IVC.

13. Polymère selon l'une quelconque des revendications 3 à 12, dans lequel le rapport molaire entre le monomère zwittérionique et le comonomère est dans la gamme comprise entre 5:95 et 80:20.

14. Polymère selon l'une quelconque des revendications précédentes, que l'on peut obtenir à partir de monomères comprenant de 5 à 50% en moles d'un monomère diluant ne comportant pas ledit groupe zwittérionique ou ledit groupe pendant.

15. Composition de revêtement liquide contenant un polymère selon l'une quelconque des revendications précédentes et un solvant dans lequel le polymère est dispersé ou dissous.

16. Produit revêtu comprenant un substrat comportant une surface qui porte un revêtement, dans lequel le revêtement comprend un polymère selon l'une quelconque des revendications 1 à 14.

17. Procédé dans lequel un substrat comportant une surface est mis en contact avec une composition de revêtement liquide selon la revendication 15 afin de revêtir ladite surface avec le polymère.

18. Procédé dans lequel un polymère peut être obtenu par polymérisation radicalaire d'un monomère zwittérionique contenant un groupe zwittérionique et d'un monomère contenant un groupe pendant, choisi parmi les groupes fluoroalkyle contenant éventuellement un ou plusieurs atomes d'oxygène de groupes éther et contenant éventuellement une ou plusieurs liaisons carbone-carbone double(s) triple(s) et des groupes siloxane.

19. Procédé selon la revendication 18 ayant les caractéristiques supplémentaires définies dans l'une quelconque des revendications 2 à 14.
